# EUROPEAN PATENT APPLICATION

(11) **EP 4 835 620 A1**
(43) Date of publication of application: **04.11.2026**
(21) Application number: 24922448.6
(22) Date of filing: 19.12.2024
(51) Int. Cl.: G06F 3/01, G06V 40/18, G06F 3/0485

(54) **WEARABLE DEVICE AND METHOD FOR IDENTIFYING EYE MOVEMENT PATTERNS, AND NON-TRANSITORY COMPUTER-READABLE RECORDING MEDIUM**

(30) Priority: 31.01.2024 KR 20240015449; 12.03.2024 KR 20240034530
(71) Applicant: Samsung Electronics Co., Ltd., Suwon-si, Gyeonggi-do 16677 (KR)
(72) Inventor: AHN, Sunggeun, Suwon-si Gyeonggi-do 16677 (KR); KIM, Kihwan, Suwon-si Gyeonggi-do 16677 (KR); KIM, Harksang, Suwon-si Gyeonggi-do 16677 (KR); KANG, Jinmo, Suwon-si Gyeonggi-do 16677 (KR); KIM, Beomsu, Suwon-si Gyeonggi-do 16677 (KR); KIM, Sungoh, Suwon-si Gyeonggi-do 16677 (KR); KIM, Jihyun, Suwon-si Gyeonggi-do 16677 (KR); YEOM, Donghyun, Suwon-si Gyeonggi-do 16677 (KR); LEE, Sanghun, Suwon-si Gyeonggi-do 16677 (KR); JUNG, Sunyoung, Suwon-si Gyeonggi-do 16677 (KR); CHOI, Minsheok, Suwon-si Gyeonggi-do 16677 (KR); CHOI, Sungsoo, Suwon-si Gyeonggi-do 16677 (KR); LEE, Gunhee, Suwon-si Gyeonggi-do 16677 (KR)
(74) Representative: HGF
(86) International application number: PCT/KR2024/020750
(87) International publication number: WO 2025/164939

(57) **Abstract**

A wearable device is disclosed. The wearable device may comprise: a display; a sensor that acquires data for identifying a user gaze; at least one processor including a processing circuit; and a memory, which stores instructions and includes at least one storage medium. The wearable device may identify movements of the user gaze through the sensor while displaying content through the display. The movements can include a combination of gaze saccade and gaze fixation. The wearable device may: identify, on the basis of the characteristics of the saccade and/or the fixation of the movement, at least one read pattern corresponding to the movements from among a plurality of read patterns having different saccade characteristics and/or fixation characteristics; and provide a read assistance function corresponding to the at least one read pattern through the display.

## Description

### [Technical Field]

The following descriptions relate to a wearable device, a method, and a non-transitory computer-readable storage medium identifying a movement pattern of an eye.

### [Background Art]

Eye tracking may refer to a technology of tracking eye movements. An electronic device may obtain an image of an eye through a sensor and may identify a gaze of a user through the obtained image of the eye. Thereafter, the electronic device may identify a movement of the eye through a change in the gaze.

### [Disclosure]

### [Technical Solution]

A wearable device is disclosed. The wearable device may comprise a display. The wearable device may comprise a sensor obtaining data for identifying a gaze of a user. The wearable device may comprise at least one processor including processing circuitry. The wearable device may comprise memory comprising one or more storage media storing instructions. The instructions, when executed by the at least one processor individually or collectively, may cause the wearable device to, through the display, while displaying a content, identify a movement of the gaze of the user through the sensor. The movement may comprise a combination of a saccade of the gaze or a fixation of the gaze. The instructions, when executed by the at least one processor individually or collectively, may cause the wearable device to identify at least one reading pattern corresponding to the movement among a plurality of reading patterns which include different characteristics of the saccade and/or different characteristics of the fixation, based on characteristics of the saccade of the movement and/or characteristics of the fixation of the movement. The instructions, when executed by the at least one processor individually or collectively, may cause the wearable device to provide a reading assistance function corresponding to the at least one reading pattern through the display.

A method is disclosed. The method may comprise may be executed by a wearable device, comprising a display, and a sensor obtaining data for identifying a gaze of a user. The method may comprise, through the display, while displaying a content, identifying a movement of the gaze of the user through the sensor. The movement may comprise a combination of a saccade of the gaze or a fixation of the gaze. The method may comprise identifying at least one reading pattern corresponding to the movement among a plurality of reading patterns which include different characteristics of the saccade and/or different characteristics of the fixation, based on characteristics of the saccade of the movement and/or characteristics of the fixation of the movement. The method may comprise providing a reading assistance function corresponding to the at least one reading pattern through the display.

A non-transitory computer-readable storage medium is disclosed. The non-transitory computer-readable storage medium may store a program including instructions. The instructions, when executed by at least one processor of a wearable device including a display and a sensor obtaining data for identifying a gaze of a user individually or collectively, may cause the wearable device to, through the display, while displaying a content, identify a movement of the gaze of the user through the sensor. The movement may comprise a combination of a saccade of the gaze or a fixation of the gaze. The instructions, when executed by the at least one processor individually or collectively, may cause the wearable device to identify at least one reading pattern corresponding to the movement among a plurality of reading patterns which include different characteristics of the saccade and/or different characteristics of the fixation, based on characteristics of the saccade of the movement and/or characteristics of the fixation of the movement. The instructions, when executed by the at least one processor individually or collectively, may cause the wearable device to provide a reading assistance function corresponding to the at least one reading pattern through the display.

### [Description of the Drawings]

FIG. 1 illustrates an example of a block diagram of a wearable device according to an embodiment.
FIG. 2 is a diagram illustrating a situation in which a wearable device identifies a gaze of a user according to an embodiment.
FIG. 3 is a diagram illustrating a movement of a gaze of a user identified by a wearable device according to an embodiment.
FIG. 4A is a diagram illustrating a movement of a gaze corresponding to a commitment pattern according to an embodiment.
FIG. 4B is a diagram illustrating a movement of a gaze corresponding to a skimming pattern according to an embodiment.
FIG. 4C is a diagram illustrating a movement of a gaze corresponding to a back-and-forth pattern according to an embodiment.
FIG. 5 is a diagram illustrating a change between states of a reading pattern according to an embodiment.
FIG. 6 is a diagram illustrating a change in a similarity between a movement of a gaze and a reading pattern according to an embodiment.
FIG. 7 is a diagram illustrating a state change over time of each of a plurality of reading patterns according to an embodiment.
FIG. 8 is a diagram illustrating a state change over time of each of a plurality of reading patterns according to an embodiment.
FIG. 9 is a diagram illustrating a state change over time of each of a plurality of reading patterns according to an embodiment.
FIG. 10 is a diagram illustrating a state change over time of each of a plurality of reading patterns according to an embodiment.
FIG. 11 is a diagram illustrating an operation in which a wearable device provides a reading assistance function corresponding to a commitment pattern according to an embodiment.
FIG. 12 is a diagram illustrating an operation in which a wearable device provides a reading assistance function corresponding to a skimming pattern according to an embodiment.
FIG. 13 is a diagram illustrating an operation in which a wearable device provides a reading assistance function corresponding to a back-and-forth pattern according to an embodiment.
FIG. 14 is a diagram illustrating an operation in which a wearable device provides a reading assistance function corresponding to a free-viewing pattern according to an embodiment.
FIG. 15 is a diagram illustrating an operation in which a wearable device generates a lifelog according to reading patterns of a gaze according to an embodiment.
FIG. 16 is a flowchart illustrating an operation of a wearable device according to an embodiment.
FIG. 17 is a diagram illustrating a situation in which an electronic device identifies a gaze of a user according to an embodiment.
FIG. 18 is a block diagram of an electronic device in a network environment according to various embodiments.

### [Mode for Invention]

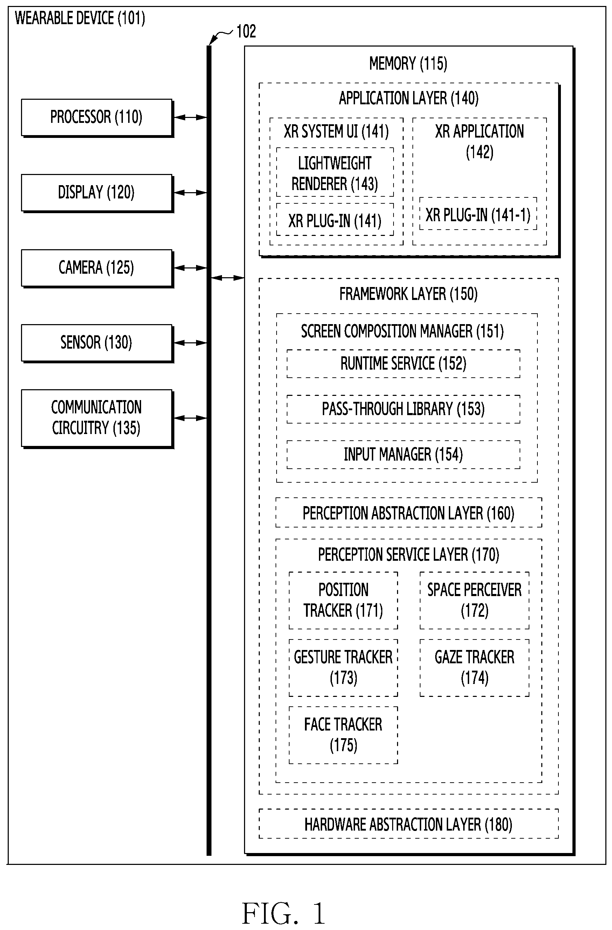

FIG. 1 is a block diagram of a wearable device 101 in a network environment 100 according to various embodiments.

FIG. 1 illustrates an example of a block diagram of a wearable device according to an embodiment.

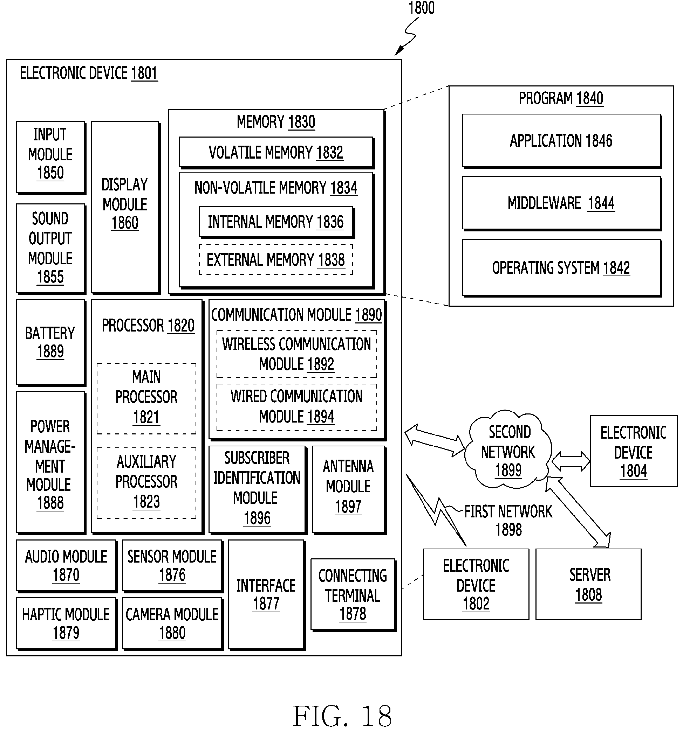

Referring to FIG. 1, the wearable device 101 according to an embodiment may include at least one of a processor 110, memory 115, a display 120, a camera 125, a sensor 130, or communication circuitry 135. The processor 110, the memory 115, the display 120, the camera 125, the sensor 130, and the communication circuitry 135 may be electrically and/or operatively connected to each other by an electronic element (or an electrical element), such as a communication bus 102. A type and/or the number of hardware components included in the wearable device 101 is not limited to as illustrated in FIG. 1. For example, the wearable device 101 may include only a portion of the hardware components illustrated in FIG. 1. The wearable device 101 according to an embodiment may correspond to an electronic device 1801 of FIG. 18.

Elements (e.g., layers and/or modules) in memory described below may be in a logically divided state. The elements in the memory 115 may be included in a hardware component distinguished from the memory 115. An operation performed by the processor 110 using each of the elements in the memory 115 is an embodiment, and the processor 110 may perform another operation different from the operation through at least one element among the elements in the memory 115.

The processor 110 of the wearable device 101 according to an embodiment may include a hardware component for processing data based on one or more instructions. The hardware component for processing data may include, for example, an arithmetic and logic unit (ALU), a field programmable gate array (FPGA), and/or a central processing unit (CPU). The number of processors 110 may be one or more. For example, the processor 110 may have a structure of a multi-core processor such as a dual core, a quad core, or a hexa core. The processor 110 of the wearable device 101 according to an embodiment may correspond to a processor 1810 of FIG. 18.

The memory 115 of the wearable device 101 according to an embodiment may include a hardware component for storing data and/or instructions input to and/or output from the processor 110. The memory 115 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a cache RAM, or a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disc, or an embedded multi media card (eMMC).

The memory 115 of the wearable device 101 according to an embodiment may correspond to memory 1830 of FIG. 18.

In an embodiment, the display 120 of the wearable device 101 may output visualized information to a user of the wearable device 101. For example, the display 120 may output visualized information to the user by being controlled by the processor 110 including circuitry such as a graphic processing unit (GPU). The display 120 may include a flat panel display (FPD) and/or electronic paper. The FPD may include a liquid crystal display (LCD), a plasma display panel (PDP), and/or one or more light emitting diodes (LEDs). The LED may include an organic LED (OLED).

The display 120 of a wearable device 101 according to an embodiment may correspond to a display module 1860 of FIG. 18.

In an embodiment, the camera 125 of the wearable device 101 may include one or more optical sensors (e.g., a charged coupled device (CCD) sensor and a complementary metal oxide semiconductor (CMOS) sensor) configured to generate electrical signals indicating a color and/or brightness of light. A plurality of optical sensors included in the camera 125 may be disposed in a form of a 2 dimensional array. The camera 125 may generate 2 dimensional frame data corresponding to light reaching optical sensors of the 2 dimensional array by obtaining electrical signals of each of the plurality of optical sensors substantially simultaneously. For example, photo data captured using the camera 125 may mean one 2 dimensional frame data obtained from the camera 125. For example, video data captured using the camera 125 may mean a sequence of a plurality of 2 dimensional frame data obtained from the camera 125 according to a frame rate. The camera 125 may further include a flashlight disposed toward a direction in which the camera 125 receives light and configured to output light toward the direction.

According to an embodiment, the wearable device 101 may include a plurality of cameras disposed toward different directions as an example of the camera 125. A first camera among the plurality of cameras may be referred to as a motion perception camera, and a second camera may be referred to as a gaze tracking camera. The wearable device 101 may identify a position, a shape, and/or a gesture of a hand using an image obtained using the first camera. The wearable device 101 may identify a direction of a gaze of a user wearing the wearable device 101 using an image obtained using the second camera. As an example, a direction in which the first camera faces and a direction in which the second camera faces may be opposite.

The camera 125 of the wearable device 101 according to an embodiment may correspond to a camera module 1880 of FIG. 18.

In an embodiment, the sensor 130 of the wearable device 101 may generate electrical information that may be processed by the processor 110 and/or the memory 115 of the wearable device 101 from non-electronic information related to the wearable device 101. The information may be referred to as sensor data. The sensor 130 may include a global positioning system (GPS) sensor for detecting a geographical position of the wearable device 101, an image sensor, an illuminance sensor, and/or a time-of-flight (ToF) sensor, and an inertial measurement unit (IMU) for detecting a physical motion of the wearable device 101.

The sensor 130 of the wearable device 101 according to an embodiment may correspond to a sensor module 1876 of FIG. 18.

In an embodiment, the communication circuitry 135 of the wearable device 101 may include a hardware component for supporting a transmission and/or a reception of electrical signals between the wearable device 101 and an external electronic device. The communication circuitry 135 may include, for example, at least one of a modem (MODEM), an antenna, or an optic/electronic (O/E) converter. The communication circuitry 135 may support the transmission and/or the reception of the electrical signals based on various types of protocols such as ethernet, a local area network (LAN), a wide area network (WAN), wireless fidelity (WiFi), Bluetooth, Bluetooth low energy (BLE), ZigBee, long term evolution (LTE), 5G new radio (NR), and/or 6G.

The communication circuitry 135 of the wearable device 101 according to an embodiment may correspond to a communication module 1890 of FIG. 18.

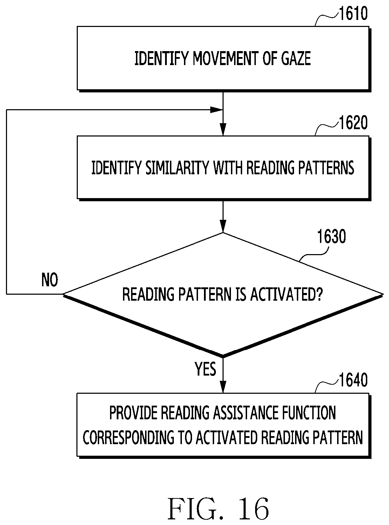

In an embodiment, one or more instructions (or commands) indicating a calculation and/or an operation to be performed on data by the processor 110 of the wearable device 101 may be stored in the memory 115 of the wearable device 101. A set of the one or more instructions may be referred to as firmware, an operating system, a process, a routine, a sub-routine, and/or an application. For example, the wearable device 101 and/or the processor 110 may perform at least one of operations of FIG. 16 when a set of a plurality of instructions distributed in a form of an operating system, firmware, a driver, and/or an application is executed. Hereinafter, an application being installed in the wearable device 101 may mean that one or more instructions provided in a form of the application are stored in the memory 115, and the one or more applications are stored in a format (e.g., a file having an extension designated by an operating system of the wearable device 101) executable by the processor 110. As an example, the application may include a program and/or a library related to a service provided to a user.

Referring to FIG. 1, programs installed in the wearable device 101 may be classified into any one layer among different layers including an application layer 140, a framework layer 150, and/or a hardware abstraction layer (HAL) 180, based on a target. For example, programs (e.g., a module or a driver) designed to target hardware (e.g., the display 120, the camera 120, and/or the sensor 130) of the wearable device 101 may be classified in the hardware abstraction layer 180. The framework layer 150 may be referred to as an extended reality (XR) framework layer in that one or more programs for providing an XR service are included. For example, FIG. 1 illustrates layers divided in the memory 115, but the layers may be logically divided. However, it is not limited thereto. According to an embodiment, the layers may be stored in a designated area in the memory 115.

For example, programs (e.g., a position tracker 171, a spatial perceiver 172, a gesture tracker 173, and/or a gaze tracker 174, and a face tracker 175) designed to target at least one of the hardware abstraction layer 180 and/or the application layer 140 may be classified in the framework layer 150. The programs classified into the framework layer 150 may provide an application programming interface (API) executable based on another program.

For example, a program designed to target a user controlling the wearable device 101 may be classified in the application layer 140. As an example of programs classified into the application layer 140, an extended reality (XR) system user interface (UI), and/or an XR application 142 is exemplified, but an embodiment is not limited thereto. For example, the programs (e.g., a software application) classified into the application layer 140 may cause execution of a function supported by the programs classified into the framework layer 150 by calling an application programming interface (API).

For example, the wearable device 101 may display, on the display 120, one or more visual objects for performing interaction with a user for using a virtual space based on execution of an XR system UI 141. A visual object may mean an object that may be disposed within a screen for a transmission of information and/or interaction, such as a text, an image, an icon, a video, a button, a checkbox, a radio button, a text box, a slider, and/or a table. The visual object may be referred to as a visual guide, a virtual object, a visual element, a UI element, a view object, and/or a view element. The wearable device 101 may provide, to the user, a service capable of controlling functions available in the virtual space based on the execution of the XR system UI 141.

Referring to FIG. 1, a lightweight renderer 143 and/or an XR plugin 144 is illustrated as being included in the XR system UI 141, but it is not limited thereto. For example, the XR system UI 141 may cause execution of a function supported by the lightweight renderer 143 and/or the XR plugin 144 included in the application layer 140.

For example, the wearable device 101 may obtain resources (e.g., an API, a system process, and/or a library) used to define, generate, and/or execute a rendering pipeline, a partial change of which is allowed, based on execution of the lightweight renderer 143. The lightweight renderer 143 may be referred to as a lightweight renderer pipeline in terms of defining the rendering pipeline, the partial change of which is allowed. The lightweight renderer 143 may include a renderer (e.g., a prebuilt renderer) built before execution of a software application. For example, the wearable device 101 may obtain resources (e.g., an API, a system process, and/or a library) used to define, generate, and/or execute an entirety of a rendering pipeline based on execution of the XR plugin 144. The XR plugin 144 may be referred to as an open XR native client in terms of defining (or setting) the entirety of the rendering pipeline.

For example, the wearable device 101 may display, on the display 120, a screen indicating at least a portion of the virtual space based on execution of the XR application 142. An XR plugin 144-1 included in the XR application 142 may be referred to as the XR plugin 144 of the XR system UI 141. Among descriptions of the XR plugin 144-1, a description overlapping with a description of the XR plugin 144 may be omitted. The wearable device 101 may cause execution of a screen composition manager 151 based on the execution of the XR application 142.

According to an embodiment, the wearable device 101 may provide a virtual space service based on the execution of the screen composition manager 151. For example, the screen composition manager 151 may include a platform (e.g., an Android platform) for supporting the virtual space service. The wearable device 101 may display, on the display, a posture of a virtual object indicating a posture of the user rendered using data obtained through the sensor 130 based on the execution of the screen composition manager 151. The screen composition manager 151 may be referred to as a composition presentation manager (CPM).

For example, the screen composition manager 151 may include a runtime service 152. As an example, the runtime service 152 may be referred to as an OpenXR runtime module. The wearable device 101 may be used to provide, through the wearable device 101, at least one of a pose prediction function of the user, a frame timing function, and/or a spatial input function based on execution of the runtime service 152. As an example, the wearable device 101 may be used to perform rendering for the virtual space service for the user based on the execution of the runtime service 152. For example, an application (e.g., unity or an OpenXR native application) may be implemented based on the execution of the runtime service 152.

For example, the screen composition manager 151 may include a pass-through library 153. While displaying a screen indicating the virtual space on the display 120 based on execution of the pass-through library 153, the wearable device 101 may overlap and display another screen indicating an actual space obtained through the camera 125 on at least a portion of the screen.

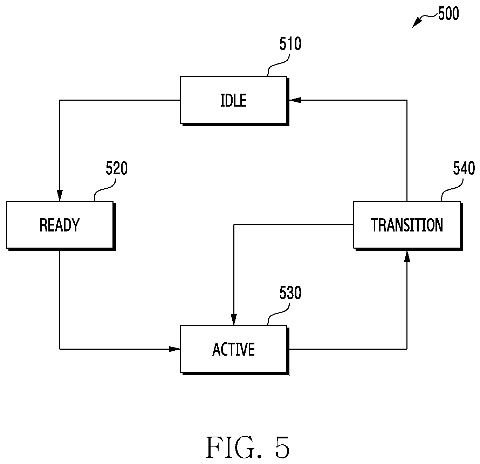

For example, the screen composition manager 151 may include a renderer (e.g., a renderer 540-1 of FIG. 5). The wearable device 101 may render, through the screen composition manager 151, a screen to be displayed on the display by compositing, using the renderer, virtual layers (or virtual nodes) rendered based on sensor data (e.g., sensing data obtained through the camera 125 or the sensor 130) and a pass-through layer (or a pass-through node) obtained through the pass-through library 153. The virtual layers may be referred to as virtual nodes and/or virtual planes. The wearable device 101 may render each of the virtual layers or render an entirety of the virtual layers through the screen composition manager 151.

For example, the screen composition manager 151 may include an input manager 154. The wearable device 101 may identify, based on execution of the input manager 154, data (e.g., sensor data) obtained by executing one or more programs included in a perception service layer 170. The wearable device 101 may initiate execution of at least one of functions of the wearable device 101 using the obtained data.

For example, a perception abstract layer 160 may be used for data exchange between the screen composition manager 151 and the perception service layer 170. In terms of being used for data exchange between the screen composition manager 151 and the perception service layer 170, the perception abstract layer 160 may be referred to as an interface. As an example, the perception abstract layer 160 may be referred to as OpenPX and/or a perception platform abstract layer (PPAL). The perception abstract layer 160 may be used for a perception client and a perception service.

According to an embodiment, the perception service layer 170 may include one or more programs for processing data obtained from the sensor 130 (or the camera 125). The one or more programs may include at least one of the position tracker 171, the spatial perceiver 172, the gesture tracker 173, the gaze tracker 174, and/or the face tracker 175. A type and/or the number of the one or more programs included in the perception service layer 170 is not limited to as illustrated in FIG. 1.

For example, the wearable device 101 may identify a posture of the wearable device 101 using the sensor 130 based on execution of the position tracker 171. The wearable device 101 may identify a 6 degrees of freedom pose (6 DOF pose) of the wearable device 101 using data obtained using the camera 125 and the IMU based on the execution of the position tracker 171. The position tracker 171 may be referred to as a head tracking (HeT) module.

For example, the wearable device 101 may be used to configure a surrounding environment of the wearable device 101 (or the user of the wearable device 101) as a 3 dimensional virtual space based on execution of the spatial perceiver 172. The wearable device 101 may reconstruct, in 3 dimensions, the surrounding environment of the wearable device 101 using data obtained using the camera 125 based on the execution of the spatial perceiver 172. The wearable device 101 may identify at least one of a plane, an inclination, or a stair based on the surrounding environment of the wearable device 101 reconstructed in 3 dimensions, based on the execution of the spatial perceiver 172. The spatial perceiver 172 may be referred to as a scene understanding (SU) module.

For example, the wearable device 101 may be used to identify (or perceive) a pose and/or a gesture of a hand of the user of the wearable device 101 based on execution of the gesture tracker 173. As an example, the wearable device 101 may identify the pose and/or the gesture of the hand of the user using data obtained from the sensor 130, based on the execution of the gesture tracker 173. As an example, the wearable device 101 may identify the pose and/or the gesture of the hand of the user based on data (or an image) obtained using the camera 125 based on the execution of the gesture tracker 173. The gesture tracker 173 may be referred to as a hand tracking (HaT) module and/or a gesture tracking module.

For example, the wearable device 101 may identify (or track) a movement of an eye of the user of the wearable device 101 based on execution of the gaze tracker 174. As an example, the wearable device 101 may identify the movement of the eye of the user using data obtained from at least one sensor based on the execution of the gaze tracker 174. As an example, the wearable device 101 may identify the movement of the eye of the user based on data obtained using the camera 125 and/or an infrared light emitting diode (IR LED) based on the execution of the gaze tracker 174. The gaze tracker 174 may be referred to as an eye tracking (ET) module and/or a gaze tracking module.

For example, the perception service layer 170 of the wearable device 101 may further include the face tracker 175 for tracking a face of the user. For example, the wearable device 101 may identify (or track) a movement of the face of the user and/or a facial expression of the user based on execution of the face tracker 175. The wearable device 101 may estimate the facial expression of the user based on the movement of the face of the user based on the execution of the face tracker 175. As an example, the wearable device 101 may identify the movement of the face of the user and/or the facial expression of the user based on data (e.g., an image) obtained using a camera based on the execution of the face tracker 175.

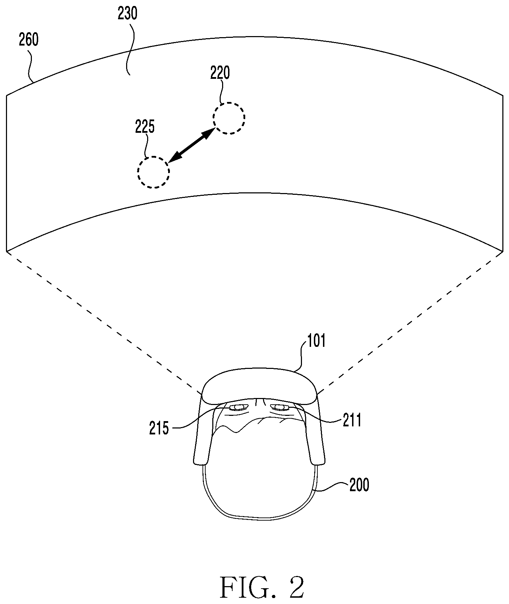

FIG. 2 is a diagram illustrating a situation in which a wearable device identifies a gaze of a user according to an embodiment.

A wearable device 101 of FIG. 2 may correspond to the wearable device 101 of FIG. 1. FIG. 2 may be described with reference to FIG. 1. In a description of FIG. 2, operations illustrated as being performed by the wearable device 101 may be performed by instructions stored in memory 115 being executed individually or collectively by at least one processor 110110. However, it is not limited thereto.

Referring to FIG. 2, the wearable device 101 may include a display 120 displaying a content 230 and a sensor 130. In an embodiment, the display 120 may correspond to a display module 1860 of FIG. 18. In an embodiment, the sensor 130 may correspond to a camera module 1880 and/or a sensor module 1876 of FIG. 18. For example, the sensor 130 may be arranged to face a face of a user 200 when the user 200 views the display 120 of the wearable device 101 so as to photograph at least a portion (e.g., eyes 221 and 215) of the face of the user 200.

In an embodiment, the user 200 may view the wearable device 101 (or the display 120 of the wearable device 101) through the eyes 211 and 215. The user 200 may appreciate the content 230 displayed through the display 120. In an embodiment, the user 200 may appreciate the content 230 within a field of view (FOV) 260 of the display 120 of the wearable device 101 through the eyes 211 and 215. For example, the content 230 may be displayed as a stereoscopic image on the display 120. The stereoscopic image may be an image considering binocular disparity of the user 200. The stereoscopic image may be an image for providing a three dimensional (3D) spatial sense to the user 200. For example, the content 230 may include a visual element (or a visual object) (e.g., a text, an image, a video, or a combination thereof). In an embodiment, the wearable device 101 may provide a convenience function when the user 200 appreciates the content 230. For example, the wearable device 101 may provide, when the user 200 appreciates the content 230, a convenience function corresponding to a reading pattern (or a movement pattern of a gaze of the user 200) of the user 200.

In an embodiment, the wearable device 101 may perform an operation of identifying a gaze of the user 200 (hereinafter, an identification operation of the gaze), an operation of identifying a reading pattern corresponding to the gaze (or a movement of the gaze) (hereinafter, an identification operation of the reading pattern), and an operation of providing an additional function (or a reading assistance function) corresponding to the reading pattern (hereinafter, a providing operation of an additional function). In an embodiment, operations performed by the wearable device 101 may be performed based on the processor 110 executing instructions stored in the memory 130. In an embodiment, the identification operation of the gaze and the identification operation of the reading pattern may be defined by instructions included in a program (e.g., a gaze tracker 174) included in a framework layer 150. In an embodiment, the providing operation of the additional function may be defined by instructions included in a program (e.g., an XR application 142) included in an application layer 140. In an embodiment, the providing operation of the additional function may be defined by the same application as an application for providing the content 230. However, it is not limited thereto.

Hereinafter, with reference to FIG. 2, the identification operation of the gaze, the identification operation of the reading pattern, and the providing operation of the additional function of the wearable device 101 will be described.

Hereinafter, the identification operation of the gaze of the wearable device 101 will be described.

In an embodiment, the wearable device 101 may obtain an identification request of the gaze. For example, the wearable device 101 may obtain the identification request of the gaze from the XR application 142 displaying the content 230. For example, the gaze tracker 174 being executed through the processor 110 may obtain the identification request of the gaze from the XR application 142 displaying the content 230 being executed through the processor 110. However, it is not limited thereto.

In an embodiment, the wearable device 101 may obtain, through the sensor 130 (e.g., the camera module 1880 of FIG. 18 and/or the sensor module 1876 of FIG. 18), spatial information (e.g., a depth map) on a user facing (or viewing) (or appreciating) (or facing) the display 120 of the wearable device 101. In an embodiment, the wearable device 101 may obtain the spatial information (e.g., the depth map) on the user based on a time-of-flight (ToF) between the wearable device 101 and the user 200 measured (or identified) through the sensor 130. In an embodiment, the wearable device 101 may identify a distance between the wearable device 101 and the user 200 (or eyes 211 and 215 of the user 200) based on data (e.g., the depth map and/or the ToF) obtained through the sensor 130.

In an embodiment, the wearable device 101 may obtain an image including the eyes 211 and 215 of the user 200 through the sensor 130. In an embodiment, the wearable device 101 may identify the eyes 211 and 215 (or positions of pupils of the eyes 211 and 215) included in the image obtained through the sensor 130. In an embodiment, the wearable device 101 may identify the gaze of the user 200 based on the identified eyes 211 and 215 (or the positions of the pupils of the eyes 211 and 215).

In an embodiment, the wearable device 101 may identify a direction of the gaze (or a area 220 or 225 on the display 120 in which the gaze faces) of the user 200 based on the positions of the pupils of the eyes 211 and 215 and a distance to the eyes 211 and 215 of the user 200.

In an embodiment, the wearable device 101 may identify a change in the area 220 or 225 (or a region of interest (ROI)) (or an appreciation area) on the display 120 in which the gaze of the user 200 faces (or in which the gaze is fixed), based on the eyes 211 and 215 (or the positions of the pupils of the eyes 211 and 215) identified in consecutive images.

Hereinafter, the identification operation of the reading pattern of the wearable device 101 will be described.

In an embodiment, the wearable device 101 may identify a characteristic of the gaze (or the movement of the gaze) of the user 200 through the consecutive images. In an embodiment, the characteristic of the gaze (or the characteristic of the movement of the gaze) may include a fixation of the gaze and a saccade of the gaze.

In an embodiment, the wearable device 101 may identify that the gaze of the user 200 is fixed (or stopped) through images consecutively obtained during a designated time length (or a time window). For example, the wearable device 101 may identify (or measure), through the consecutive images, a time during which the gaze of the user 200 is fixed (or stopped) (or a gaze fixation time) (or a dwell time). For example, the fixation of the gaze may refer to a situation in which the eyes 211 and 215 are maintained for a predetermined time (e.g., 200 milliseconds) or more in a state of focusing on a specific position.

In an embodiment, the wearable device 101 may identify the area 220 or 225 on the content 230 in which the gaze of the user 200 is fixed (or in which the gaze faces) (or in which the gaze is positioned). In an embodiment, the wearable device 101 may identify a type (e.g., a text, an image, or a video) of an object displayed in the area 220 or 225 on the content 230 in which the gaze of the user 200 is fixed (or in which the gaze faces) (or in which the gaze is positioned), or a content (e.g., a meaning or a content of a word (or a sentence), a content of an image, or a content of a video) of the object. However, it is not limited thereto.

In an embodiment, the wearable device 101 may identify that the gaze of the user 200 jumps (or that the gaze moves) through images consecutively obtained during the designated time length (or the time window). For example, the wearable device 101 may identify, through the consecutive images, a distance by which the gaze of the user 200 jumps, a direction in which the gaze jumps, and/or a saccade time. For example, the saccade of the gaze may refer to a situation in which the eyes 211 and 215 rapidly move between two neighboring fixations of the gaze.

In an embodiment, the wearable device 101 may identify that the gaze jumps (or the gaze moves) between two areas 220 and 225 on the content 230 in which the gaze of the user 200 is fixed (or in which the gaze faces) (or in which the gaze is positioned). For example, the wearable device 101 may identify that the gaze of the user 200 jumps (or moves) from the area 220 to the area 225. Before the gaze jumps from the area 220 to the area 225, the gaze may have a state of being fixed to the area 220 for some time length. After the gaze jumps from the area 220 to the area 225, the gaze may have a state of being fixed to the area 225 for at least some time length. In an embodiment, the at least some time length may be greater than or equal to a predetermined time (e.g., 200 milliseconds) for determining the fixation of the gaze. However, it is not limited thereto.

In an embodiment, the wearable device 101 may identify, through the movement of the gaze of the user 200, a pattern (or a reading pattern) (or movement patterns) in which the user 200 appreciates the content 230. In an embodiment, the wearable device 101 may identify at least one pattern in which the user 200 views the content 230 among a plurality of patterns (or the reading patterns) (or the movement patterns). In an embodiment, the wearable device 101 may identify the at least one pattern in which the user 200 views the content 230 through a comparison between each of the plurality of patterns (or the reading patterns) (or the movement patterns) and the movement of the gaze of the user 200. It may identify the at least one pattern in which the user 200 views the content 230. For example, the plurality of patterns may include a commitment pattern, a skimming pattern, a back-and-forth pattern, or a free-viewing pattern. For example, the plurality of patterns may be defined differently from each other in a characteristic (e.g., a gaze fixation time, a type of an object on which the gaze is fixed, and/or a content of the object) of the gaze fixation, and/or a characteristic (e.g., the distance by which the gaze jumps, the direction in which the gaze jumps, and/or the saccade time) of a gaze saccade.

In an embodiment, the wearable device 101 may identify at least one pattern corresponding to the movement of the gaze of the user 200 based on a characteristic of the saccade and/or a characteristic of the fixation of the gaze of the user 200.

In an embodiment, the wearable device 101 may determine whether consecutive designated numbers (e.g., two) of gaze fixations and gaze saccades between the consecutive designated numbers (e.g., two) of the gaze fixations correspond to the commitment pattern. In an embodiment, in a case that a direction of a gaze saccade is a writing direction (e.g., a horizontal direction (or a rightward direction)) and/or a line break direction (e.g., a vertical direction (or a downward direction)) of the content 230, the wearable device 101 may identify (or determine) that a movement of a gaze corresponds to the commitment pattern. In an embodiment, in a case that gaze fixation times of the gaze fixations are greater than or equal to a reference fixation time, the wearable device 101 may identify (or determine) that the movement of the gaze corresponds to the commitment pattern. However, it is not limited thereto. In an embodiment, in a case that a direction of the gaze saccade is consecutive in the writing direction (e.g., the horizontal direction) of the content 230, the wearable device 101 may identify (or determine) that the movement of the gaze corresponds to the commitment pattern. In an embodiment, in a case that a direction of the gaze saccade is not repeated in the line break direction (e.g., the vertical direction) of the content 230, the wearable device 101 may identify (or determine) that the movement of the gaze corresponds to the commitment pattern. The number of the gaze fixations for determining the commitment pattern exemplified above is merely an example. According to an embodiment, the commitment pattern may be determined based on the number of gaze fixations different from two and gaze saccades according thereto.

In an embodiment, the wearable device 101 may determine whether consecutive designated numbers (e.g., two) of gaze fixations and gaze saccades between the consecutive designated numbers (e.g., two) of the gaze fixations correspond to the skimming pattern. In an embodiment, in a case that a distance of the gaze saccade is greater than or equal to a reference saccade distance (e.g., a distance required according to a line break, or a distance in which a specific number or more of words are written), the wearable device 101 may identify (or determine) that a movement of a gaze corresponds to the skimming pattern. In an embodiment, in a case that a direction of the gaze saccade is repeated in the line break direction (e.g., the vertical direction), the wearable device 101 may identify (or determine) that the movement of the gaze corresponds to the skimming pattern. In an embodiment, in a case that a gaze fixation time of the gaze fixation is less than a reference fixation time, the wearable device 101 may identify (or determine) that the movement of the gaze corresponds to the skimming pattern. The number of gaze fixations for determining the skimming pattern exemplified above is merely an example. According to an embodiment, the skimming pattern may be determined based on the number of gaze fixations different from three and gaze saccades according thereto.

In an embodiment, the wearable device 101 may determine whether consecutive designated numbers (e.g., four) of gaze fixations and at least two gaze saccades between the consecutive designated numbers (e.g., four) of the gaze fixations correspond to the commitment pattern. In an embodiment, in a case that two or more saccades among at least three gaze saccades are saccades between a plurality of areas of the content 230, the wearable device 101 may identify (or determine) that a movement of a gaze corresponds to the back-and-forth pattern. In an embodiment, in a case that the gaze repeatedly jumps between one area and a plurality of other areas of the content 230, the wearable device 101 may identify (or determine) that the movement of the gaze corresponds to the back-and-forth pattern. In a case that the gaze repeatedly jumps in a first direction (e.g., the line break direction (e.g., the vertical direction (or the downward direction)), or the writing direction (e.g., the horizontal direction (or the rightward direction))) and a second direction (e.g., a direction opposite to the line break direction (e.g., an upward direction), or a direction opposite to the writing direction (e.g., a leftward direction)) opposite to the first direction, the movement of the gaze may be identified (or determined) as corresponding to the back-and-forth pattern. In an embodiment, in a case that a gaze saccade is repeated between the plurality of areas of the content 230 and a gaze fixation time of the gaze fixation is greater than or equal to a reference fixation time, the wearable device 101 may identify (or determine) that the movement of the gaze corresponds to the back-and-forth pattern. The number of gaze fixations for determining the back-and-forth pattern exemplified above is merely an example. According to an embodiment, the back-and-forth pattern may be determined based on the number of gaze fixations different from four and gaze saccades according thereto.

In an embodiment, the wearable device 101 may identify a combination step (or a similarity) between the movement of the gaze and each of the plurality of patterns based on characteristics of a plurality of gaze fixations and/or characteristics of a plurality of gaze saccades indicating the movement of the gaze during the designated time length (or the time window). For example, the wearable device 101 may determine whether a combination of a minimum number of a plurality of gaze fixations capable of interpreting a pattern and a plurality of gaze saccades between the plurality of gaze fixations corresponds to each of the plurality of patterns.

For example, in a case that the commitment pattern is determined based on 2 gaze fixations and 1 gaze saccade, the wearable device 101 may determine whether each of 9 movements of the gaze combined based on 10 gaze fixations and 9 gaze saccades corresponds to the commitment pattern. For example, the wearable device 101 may identify a ratio of movements corresponding to the commitment pattern among 9 movements of the gaze as a combination step (or a similarity) for the commitment pattern.

For example, in a case that the skimming pattern is determined based on 3 gaze fixations and 2 gaze saccades, the wearable device 101 may determine whether each of 8 movements of the gaze combined based on 10 gaze fixations and 9 gaze saccades corresponds to the skimming pattern. For example, the wearable device 101 may identify a ratio of movements corresponding to the skimming pattern among 8 movements of the gaze as a combination step (or a similarity) for the skimming pattern.

For example, in a case that the back-and-forth pattern is determined based on 4 gaze fixations and 3 gaze saccades, the wearable device 101 may determine whether each of 7 movements of the gaze combined based on 10 gaze fixations and 9 gaze saccades corresponds to the back-and-forth pattern. For example, the wearable device 101 may identify a ratio of movements corresponding to the back-and-forth pattern among 7 movements of the gaze as a combination step (or a similarity) for the back-and-forth pattern.

Identifying a combination step (or a similarity) based on a ratio of a movement is merely an example. For example, the wearable device 101 may identify, as a similarity, a distance (or a cosine similarity) between values (or vector values) indicated by characteristics of a plurality of gaze fixations and/or characteristics of a plurality of gaze saccades indicating a movement of a gaze during a designated time length (or a time window), and values (or vector values) indicated by characteristics of a gaze fixation and a gaze saccade set for each of a plurality of patterns. However, it is not limited thereto. In an embodiment, the wearable device 101 may identify a probability for each of the plurality of patterns as a similarity by inputting, to an artificial intelligence (AI) model (e.g., a model adopting a convolutional neural network (CNN)) for classifying classes (or patterns), the values (or the vector values) indicated by the characteristics of the plurality of gaze fixations and/or the characteristics of the plurality of gaze saccades indicating the movement of the gaze during the designated time length (or the time window).

In an embodiment, the wearable device 101 may identify a state of each of the plurality of patterns based on the similarity of each of the plurality of patterns. In an embodiment, the state of each of the plurality of patterns may include idle, ready, active, or transition. In an embodiment, the wearable device 101 may identify that a pattern, among the plurality of patterns, having a state other than the idle (i.e., the ready, the active, or the transition) is a pattern corresponding to the movement of the gaze.

In an embodiment, after a state of the pattern is changed from the transition to the idle, in a time section during which a similarity between the pattern and the movement of the gaze is maintained to be less than a first reference similarity, the pattern may be determined as an idle state. In an embodiment, from a time point at which the similarity between the pattern and the movement of the gaze increases to be greater than or equal to the first reference similarity in the state of the pattern being the idle state, during a time section for a ready time, the pattern may be determined as a ready state. In an embodiment, from after the ready time from a time point at which the state of the pattern is the ready state, in a time section during which the similarity is greater than or equal to a second reference similarity, the pattern may be determined as an active state. In an embodiment, from a time point at which the similarity between the pattern and the movement of the gaze decreases to be less than the second reference similarity while the state of the pattern is the active state, during a time section for a transition time, the pattern may be determined as a transition state. In an embodiment, in a case that the similarity of the pattern does not increase to be greater than or equal to the first reference similarity for the transition time, the pattern may be determined as the idle state after the transition time.

Hereinafter, the providing operation of the additional function of the wearable device 101 will be described.

In an embodiment, the wearable device 101 may obtain information on a characteristic of the movement of the gaze and/or at least one pattern corresponding to the movement of the gaze. For example, the wearable device 101 may obtain, from a middleware 144, data for identifying the characteristic of the movement of the gaze and/or the at least one pattern corresponding to the movement of the gaze. In an embodiment, an application 146 that generates an identification request of the gaze may provide the additional function (or determine whether to provide the additional function) based on the data from the middleware 144. However, it is not limited thereto.

In an embodiment, the wearable device 101 may identify an additional function (or a reading assistance function) corresponding to a pattern corresponding to the movement of the gaze. For example, in a case that the pattern corresponding to the movement of the gaze is one, the wearable device 101 may identify one additional function.

In an embodiment, in a case that the pattern corresponding to the movement of the gaze is the commitment pattern, the wearable device 101 may identify auto scroll as the additional function (or the reading assistance function). In an embodiment, in a case that the pattern corresponding to the movement of the gaze is the skimming pattern, the wearable device 101 may identify a summary of the content 230 as the additional function. In an embodiment, in a case that the pattern corresponding to the movement of the gaze is the back-and-forth pattern, the wearable device 101 may identify provision of a visual cue and/or provision of an auxiliary screen (e.g., a screen indicating one area among two areas 220 and 225 to which the gaze jumps) as the additional function. In an embodiment, in a case that the pattern corresponding to the movement of the gaze is the free-viewing pattern, the wearable device 101 may identify position adjustment of an additional content (e.g., a subtitle) as the additional function.

In an embodiment, in a case that there are two or more patterns corresponding to the movement of the gaze, the wearable device 101 may identify two or more additional functions. However, it is not limited thereto. For example, in a case that there are two or more patterns corresponding to the movement of the gaze, the wearable device 101 may identify an additional function corresponding to a combination of the two or more patterns corresponding to the movement of the gaze. For example, in a case that there are two or more patterns corresponding to the movement of the gaze, the wearable device 101 may identify a selected additional function among two or more additional functions corresponding to the two or more patterns corresponding to the movement of the gaze.

For example, in a case that patterns corresponding to the movement of the gaze are the commitment pattern and the back-and-forth pattern, the wearable device 101 may identify the auto scroll and the provision of the visual cue (or the auxiliary screen) as the additional function. For example, while scrolling the content 230 through the auto scroll, the wearable device 101 may display an object displayed through another area (e.g., the area 225) in a periphery (e.g., an area positioned in a direction (e.g., the vertical direction) other than a direction (e.g., the horizontal direction) in which the gaze jumps during commitment reading) of an area (e.g., the area 220) among two areas 220 and 225 to which the gaze jumps. In an embodiment, the area (e.g., the area 220) may be an area in which the commitment pattern is identified. In an embodiment, the another area (e.g., the area 225) may be an area in which the commitment pattern is not identified. However, it is not limited thereto. The area (e.g., the area 220) may be an area including a text (or an area not including an image or a video). The another area (e.g., the area 225) may be an area including an image or a video.

In an embodiment, the wearable device 101 may provide (or perform) the identified at least one additional function.

As described above, the wearable device 101 may provide various user convenience functions through classification of reading patterns. In addition, in a case that a plurality of reading patterns are activated simultaneously (or sequentially), the wearable device 101 may increase user convenience by providing (or performing) at least one function corresponding to the plurality of reading patterns.

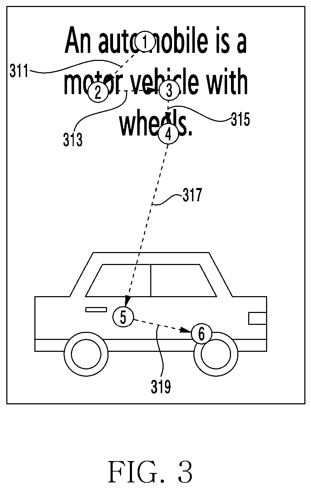

FIG. 3 is a diagram illustrating a movement of a gaze of a user identified by a wearable device according to an embodiment.

FIG. 3 may be described with reference to FIGS. 1 and 2.

Referring to FIG. 3, a wearable device 101 may identify a movement of a gaze of a user 200 viewing a content 300 including a text and an image. In an embodiment, the wearable device 101 may identify a change in an area 220 or 225 (or a region of interest (or an appreciation area)) on a display 120 in which the gaze of the user 200 faces (or in which the gaze is fixed), based on eyes 211 and 215 (or positions of pupils of the eyes 211 and 215) identified in consecutive images.

In an embodiment, the wearable device 101 may identify a characteristic of the gaze (or a movement of the gaze) of the user 200 through the consecutive images. In an embodiment, the characteristic of the gaze (or the characteristic of the movement of the gaze) may include a fixation of the gaze and a saccade of the gaze.

For example, the wearable device 101 may identify gaze fixations 1, 2, 3, and 4 on some words (e.g., automobile, motor, vehicle, and wheels) among a plurality of words (e.g., an, automobile, is, a, motor, vehicle, with, and wheels) included in the text. For example, the wearable device 101 may identify gaze fixations 5 and 6 on an image. For example, the wearable device 101 may identify (or measure) a characteristic (e.g., a gaze fixation time, a type of an object on which the gaze is fixed, and/or a content of the object) of each of the gaze fixations 1, 2, 3, 4, 5, and 6.

For example, the wearable device 101 may identify gaze saccades 311, 313, 315, 317, and 319 between the gaze fixations 1, 2, 3, 4, 5, and 6. For example, the wearable device 101 may identify the gaze saccades 311, 313, and 315 for being directed from a text to another text. For example, the wearable device 101 may identify the gaze saccade 317 for being directed from the text to the image. For example, the wearable device 101 may identify the gaze saccade 319 for changing an object viewed in the image. For example, the wearable device 101 may identify (or measure) a characteristic (e.g., a distance by which the gaze jumps, a direction in which the gaze jumps, and/or a saccade time) of each of the gaze saccades 311, 313, 315, 317, and 319.

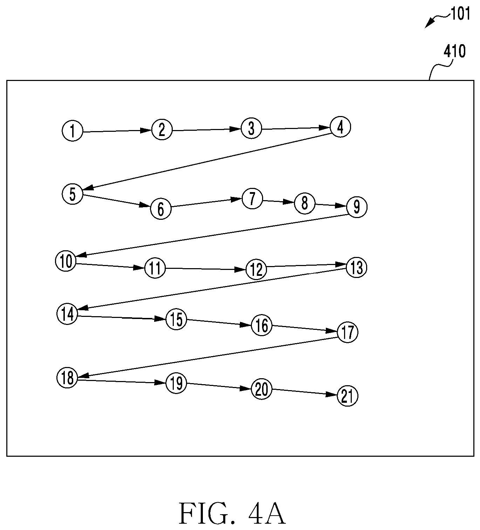

In an embodiment, the wearable device 101 may identify a pattern in which the user 200 appreciates the content 300, based on the movement of the gaze (or the gaze fixations 1, 2, 3, 4, 5, and 6 and the gaze saccades 311, 313, 315, 317, and 319). In an embodiment, the wearable device 101 may identify a pattern in which the user 200 appreciates the content 300, based on a characteristic of the movement of the gaze (or characteristics of the gaze fixations 1, 2, 3, 4, 5, and 6 and characteristics of the gaze saccades 311, 313, 315, 317, and 319). Hereinafter, with reference to FIGS. 4A to 4C, an operation in which the wearable device 101 identifies patterns corresponding to the movement of the gaze will be described.

FIG. 4A is a diagram illustrating a movement of a gaze corresponding to a commitment pattern according to an embodiment.

FIG. 4A may be described with reference to FIGS. 1, 2, and 3.

Referring to FIG. 4A, a wearable device 101 may identify a movement of a gaze of a user 200 viewing a content 410 (e.g., a document) aligned according to a writing direction. In an embodiment, the wearable device 101 may identify a change in an area (or a region of interest (or an appreciation area)) on a display 120 in which the gaze of the user 200 faces (or in which the gaze is fixed), based on eyes 211 and 215 (or positions of pupils of the eyes 211 and 215) identified in consecutive images. In an embodiment, the writing direction may be a direction in which lines are aligned in a vertical direction (or a downward direction), and characters within one line are aligned in a horizontal direction (or a rightward direction).

In an embodiment, the wearable device 101 may identify gaze fixations 1 to 21 according to the gaze (or the movement of the gaze) of the user 200 through the consecutive images. For example, the wearable device 101 may identify (or measure) a characteristic (e.g., a gaze fixation time, a type of an object on which the gaze is fixed, and/or a content of the object) of each of the gaze fixations 1 to 21.

For example, the wearable device 101 may identify gaze saccades between the gaze fixations 1 to 21. For example, the wearable device 101 may identify (or measure) a characteristic (e.g., a distance by which the gaze jumps, a direction in which the gaze jumps, and/or a saccade time) of each of the gaze saccades. In an embodiment, the wearable device 101 may identify a pattern corresponding to the movement of the gaze, based on characteristics of two or more gaze fixations and a characteristic of at least one gaze saccade between the two or more gaze fixations.

In an embodiment, in a case that a direction of a gaze saccade corresponds to the writing direction (e.g., the horizontal direction (or the rightward direction)) and/or a line break direction (e.g., the vertical direction (or the downward direction)) of the content 410, the wearable device 101 may identify (or determine) that the movement of the gaze corresponds to the commitment pattern. In an embodiment, in a case that a direction of the gaze saccade is consecutive in a direction (e.g., the horizontal direction) in which the characters of the content 230 are arranged (or aligned), the wearable device 101 may identify (or determine) that the movement of the gaze corresponds to the commitment pattern. In an embodiment, in a case that a direction of the gaze saccade is not repeated in the line break direction (e.g., the vertical direction) of the content 230, the wearable device 101 may identify (or determine) that the movement of the gaze corresponds to the commitment pattern. In an embodiment, in a case that a gaze fixation time of a gaze fixation is greater than or equal to a reference fixation time, the wearable device 101 may identify (or determine) that the movement of the gaze corresponds to the commitment pattern.

For example, based on that gaze fixation times of gaze fixations 1 to 4 are greater than or equal to the reference fixation time and a gaze saccade between two neighboring gaze fixations (e.g., gaze fixations 1 and 2, gaze fixations 2 and 3, and gaze fixations 3 and 4) is in the writing direction, the wearable device 101 may identify (or determine) that each of movements of the gaze for the gaze fixations 1 to 4 corresponds to the commitment pattern.

For example, based on that gaze saccades (e.g., a gaze saccade between gaze fixations 4 and 5, a gaze saccade between gaze fixations 9 and 10, a gaze saccade between gaze fixations 13 and 14, or a gaze saccade between gaze fixations 17 and 18) in the line break direction are not consecutive, it may be identified (or determined) that each of movements of the gaze corresponds to the commitment pattern. In an embodiment, gaze saccades in the line break direction being not consecutive may indicate that two or more consecutive gaze saccades do not jump in the line break direction. For example, gaze saccades in the line break direction being not consecutive may indicate that gaze saccades in the writing direction are included between the gaze saccades in the line break direction. According to an embodiment, gaze saccades in the line break direction being not consecutive may be described as that the gaze saccades in the line break direction are periodically repeated.

In an embodiment, the wearable device 101 may identify a combination step (or a similarity) between the movement of the gaze and the commitment pattern, based on a plurality of gaze fixations and/or a plurality of gaze saccades indicating the movement of the gaze during a designated time length (or a time window). For example, in a case that the commitment pattern is determined based on 2 consecutive gaze fixations and 1 gaze saccade, the wearable device 101 may identify 20 movements of the gaze based on 21 gaze fixations and 20 gaze saccades. For example, the wearable device 101 may identify a ratio of movements corresponding to the commitment pattern among the 20 movements of the gaze as a combination step (or a similarity) for the commitment pattern.

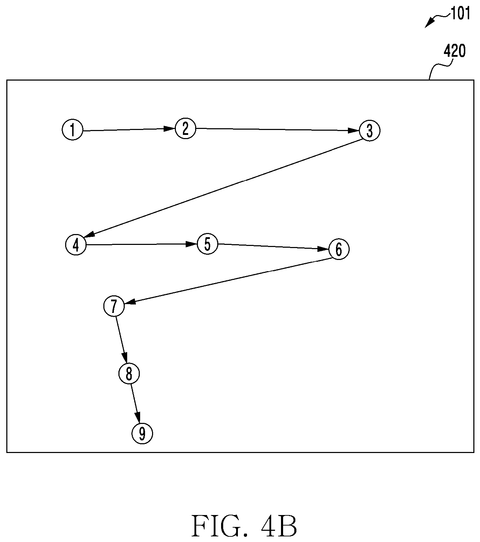

FIG. 4B is a diagram illustrating a movement of a gaze corresponding to a skimming pattern according to an embodiment.

FIG. 4B may be described with reference to FIGS. 1, 2, and 3.

Referring to FIG. 4B, the wearable device 101 may identify a movement of a gaze of the user 200 viewing a content 420 (e.g., a document) aligned according to a writing direction. In an embodiment, the wearable device 101 may identify a change in an area (or a region of interest (or an appreciation area)) on the display 120 in which the gaze of the user 200 faces (or in which the gaze is fixed), based on the eyes 211 and 215 (or positions of the pupils of the eyes 211 and 215) identified in consecutive images. In an embodiment, the writing direction may be a direction in which lines are aligned in a vertical direction (or a downward direction), and characters within one line are aligned in a horizontal direction (or a rightward direction).

In an embodiment, the wearable device 101 may identify gaze fixations 1 to 9 according to the gaze (or the movement of the gaze) of the user 200 through the consecutive images. For example, the wearable device 101 may identify (or measure) a characteristic (e.g., a gaze fixation time, a type of an object on which the gaze is fixed, and/or a content of the object) of each of the gaze fixations 1 to 9.

For example, the wearable device 101 may identify gaze saccades between the gaze fixations 1 to 9. For example, the wearable device 101 may identify (or measure) a characteristic (e.g., a distance by which the gaze jumps, a direction in which the gaze jumps, and/or a saccade time) of each of the gaze saccades. In an embodiment, the wearable device 101 may identify a pattern corresponding to the movement of the gaze, based on characteristics of two or more gaze fixations and a characteristic of at least one gaze saccade between the two or more gaze fixations.

In an embodiment, the wearable device 101 may determine whether a consecutive designated number (e.g., two) of gaze fixations and gaze saccades between the consecutive designated number (e.g., two) of the gaze fixations correspond to the skimming pattern. In an embodiment, in a case that a distance of a gaze saccade is greater than or equal to a reference saccade distance (e.g., a distance required according to a line break, or a distance in which a specific number or more words are written), the wearable device 101 may identify (or determine) that the movement of the gaze corresponds to the skimming pattern. In an embodiment, in a case that a direction of a gaze saccade is repeated in a line break direction (e.g., a vertical direction), the wearable device 101 may identify (or determine) that the movement of the gaze corresponds to the skimming pattern. In an embodiment, in a case that a gaze fixation time of a gaze fixation is less than a reference fixation time, the wearable device 101 may identify (or determine) that the movement of the gaze corresponds to the skimming pattern.

For example, based on that a distance of a gaze saccade between gaze fixations 1 and 2 is greater than or equal to a reference saccade distance (e.g., a distance in which a specific number or more words are written), the wearable device 101 may identify (or determine) that the movement of the gaze for the gaze fixations 1 and 2 corresponds to the skimming pattern. For example, based on that a distance of a gaze saccade between gaze fixations 3 and 4 is greater than or equal to a reference saccade distance (e.g., a distance required according to the line break), the wearable device 101 may identify (or determine) that the movement of the gaze for the gaze fixations 3 and 4 corresponds to the skimming pattern.

For example, based on that consecutive gaze saccades (e.g., gaze saccades between gaze fixations 6 to 9) have the line break direction, the wearable device 101 may identify (or determine) that the movement of the gaze for the gaze fixations 6 to 9 corresponds to the skimming pattern.

In an embodiment, the wearable device 101 may identify a combination step (or a similarity) between the movement of the gaze and the skimming pattern, based on a plurality of gaze fixations and/or a plurality of gaze saccades indicating the movement of the gaze during a designated time length (or a time window). For example, in a case that the skimming pattern is determined based on 2 consecutive gaze fixations and 1 gaze saccade, the wearable device 101 may identify 8 movements of the gaze based on 9 gaze fixations and 8 gaze saccades. For example, the wearable device 101 may identify a ratio of movements corresponding to the skimming pattern among the 8 movements of the gaze as a combination step (or a similarity) for the skimming pattern. For example, in a case that the skimming pattern is determined based on 3 consecutive gaze fixations and 2 gaze saccades, the wearable device 101 may identify 7 movements of the gaze based on 9 gaze fixations and 8 gaze saccades. For example, the wearable device 101 may identify a ratio of movements corresponding to the skimming pattern among the 7 movements of the gaze as a combination step (or a similarity) for the skimming pattern.

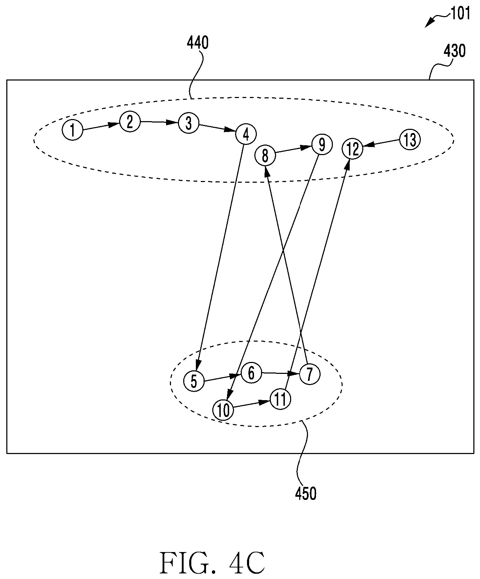

FIG. 4C is a diagram illustrating a movement of a gaze corresponding to a back-and-forth pattern according to an embodiment.

FIG. 4C may be described with reference to FIGS. 1, 2, and 3.

Referring to FIG. 4C, the wearable device 101 may identify a movement of a gaze of the user 200 viewing a content 430 (e.g., a document) aligned according to a writing direction. In an embodiment, the wearable device 101 may identify areas 440 and 450 (or a change in a region of interest (or an appreciation area)) on the display 120 in which the gaze of the user 200 faces (or in which the gaze is fixed), based on the eyes 211 and 215 (or positions of the pupils of the eyes 211 and 215) identified in consecutive images. For example, the area 440 may be an area including a text (or an area not including an image or a video). The area 450 may be an area including an image or a video.

In an embodiment, the wearable device 101 may identify gaze fixations 1 to 13 according to the gaze (or the movement of the gaze) of the user 200 through the consecutive images. For example, the wearable device 101 may identify (or measure) a characteristic (e.g., a gaze fixation time, a type of an object on which the gaze is fixed, and/or a content of the object) of each of the gaze fixations 1 to 13.

For example, the wearable device 101 may identify gaze saccades between the gaze fixations 1 to 13. For example, the wearable device 101 may identify (or measure) a characteristic (e.g., a distance by which the gaze jumps, a direction in which the gaze jumps, and/or a saccade time) of each of the gaze saccades. In an embodiment, the wearable device 101 may identify a pattern corresponding to the movement of the gaze, based on characteristics of two or more gaze fixations and a characteristic of at least one gaze saccade between the two or more gaze fixations.

In an embodiment, the wearable device 101 may determine whether a consecutive designated number (e.g., four) of gaze fixations and at least two gaze saccades between the consecutive designated number (e.g., four) of the gaze fixations correspond to a commitment pattern. In an embodiment, in a case that two or more saccades among at least three gaze saccades are saccades between a plurality of areas of the content 230, the wearable device 101 may identify (or determine) that the movement of the gaze corresponds to the back-and-forth pattern. In an embodiment, in a case that the gaze repeatedly jumps between one area of the content 230 and a plurality of other areas, the wearable device 101 may identify (or determine) that the movement of the gaze corresponds to the back-and-forth pattern. In a case that the gaze repeatedly jumps in a first direction (e.g., a line break direction (e.g., a vertical direction (or a downward direction)), or the writing direction (e.g., a horizontal direction (or a rightward direction))) and a second direction (e.g., a direction opposite to the line break direction (e.g., an upward direction) opposite to the first direction, or a direction (e.g., a leftward direction) opposite to the writing direction), the wearable device 101 may identify (or determine) that the movement of the gaze corresponds to the back-and-forth pattern. In an embodiment, in a case that a gaze saccade is repeated between the plurality of areas of the content 230 and a gaze fixation time of a gaze fixation is greater than or equal to a reference fixation time, the wearable device 101 may identify (or determine) that the movement of the gaze corresponds to the back-and-forth pattern.

For example, based on that gaze fixation times of gaze fixations 1 to 4 are greater than or equal to a reference fixation time and a gaze saccade between two neighboring gaze fixations (e.g., gaze fixations 1 and 2, gaze fixations 2 and 3, and gaze fixations 3 and 4) is in the writing direction, the wearable device 101 may identify (or determine) that each of movements of the gaze for the gaze fixations 1 to 4 corresponds to the commitment pattern.

For example, based on that consecutive gaze saccades (e.g., gaze saccades between gaze fixations 4 to 8) jump between two areas 440 and 450, the wearable device 101 may identify (or determine) that the movement of the gaze for the gaze fixations 4 to 8 corresponds to the back-and-forth pattern. For example, based on that consecutive gaze saccades (e.g., gaze saccades between gaze fixations 9 to 12) jump between the two areas 440 and 450, the wearable device 101 may identify (or determine) that the movement of the gaze for the gaze fixations 9 to 12 corresponds to the back-and-forth pattern.

In an embodiment, the wearable device 101 may identify a combination step (or a similarity) between the movement of the gaze and the back-and-forth pattern, based on a plurality of gaze fixations and/or a plurality of gaze saccades indicating the movement of the gaze during a designated time length (or a time window). For example, in a case that the back-and-forth pattern is determined based on 4 consecutive gaze fixations and 3 gaze saccades, the wearable device 101 may identify 10 movements of the gaze based on 13 gaze fixations and 12 gaze saccades. For example, the wearable device 101 may identify a ratio of movements corresponding to the back-and-forth pattern among the 10 movements of the gaze as a combination step (or a similarity) for the back-and-forth pattern. However, it is not limited thereto. For example, in a case that the back-and-forth pattern is determined based on 5 consecutive gaze fixations and 4 gaze saccades, the wearable device 101 may identify 9 movements of the gaze based on 13 gaze fixations and 12 gaze saccades. For example, the wearable device 101 may identify a ratio of movements corresponding to the back-and-forth pattern among the 9 movements of the gaze as a combination step (or a similarity) for the back-and-forth pattern.

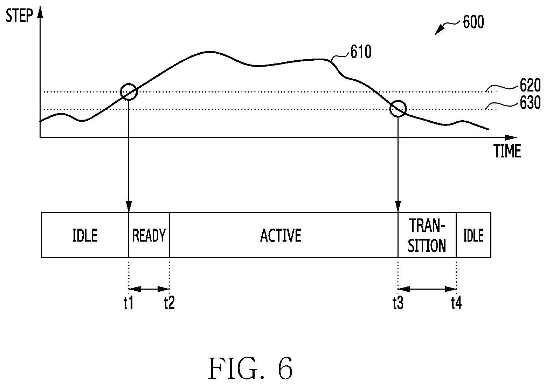

FIG. 5 is a diagram illustrating a change between states of a reading pattern according to an embodiment. FIG. 6 is a diagram illustrating a change in a similarity between a movement of a gaze and a reading pattern according to an embodiment.

FIGS. 5 and 6 may be described with reference to FIGS. 1, 2, 3, 4A, 4B, and 4C.

In an embodiment, a wearable device 101 may identify a state of each of a plurality of patterns based on a similarity of each of the plurality of patterns. In an embodiment, referring to a state transition diagram 500 of FIG. 5, the state of each of the plurality of patterns may include an idle 510, a ready 520, an active 530, or a transition 540. In an embodiment, the wearable device 101 may identify that a pattern having a state other than the idle 510 (i.e., the ready 520, the active 530, or the transition 540) among the plurality of patterns is a pattern corresponding to a movement of a gaze.

Referring to a graph 600 of FIG. 6, the wearable device 101 may identify a state of a pattern based on a similarity 610. For example, in a time section (e.g., a time section before t1) during which the similarity 610 between the pattern and the movement of the gaze is maintained to be less than a first reference similarity 620, the pattern may be determined as the idle 510. In an embodiment, while the pattern is the idle 510, during a time section (e.g., t1 to t2) from the time point t1 at which the similarity 610 increases to be greater than or equal to the first reference similarity 620 to a ready time, the pattern may be determined as the ready 520. In an embodiment, from after the ready time from a time point t2 at which the pattern is the ready 520, in a time section in which the similarity 610 is greater than or equal to a second reference similarity 630, the pattern may be determined as the active 530. In an embodiment, during a time section (e.g., t3 to t4) from a time point t3 at which the similarity 610 decreases to be less than the second reference similarity 630 while the pattern is the active 630 to a transition time, the pattern may be determined as the transition 530. In an embodiment, in a case that the similarity 610 does not increase to be greater than or equal to the first reference similarity 620 during the transition time (e.g., t3 to t4), the pattern may be determined as the idle 510 after the transition time (i.e., after t4).

In an embodiment, the wearable device 101 may set different first reference similarities 620 and second reference similarities 630 for each of a plurality of patterns. For example, different first reference similarities 620 and second reference similarities 630 for a back-and-forth pattern may be lower than different first reference similarities 620 and second reference similarities 630 for a commitment pattern. However, it is not limited thereto.

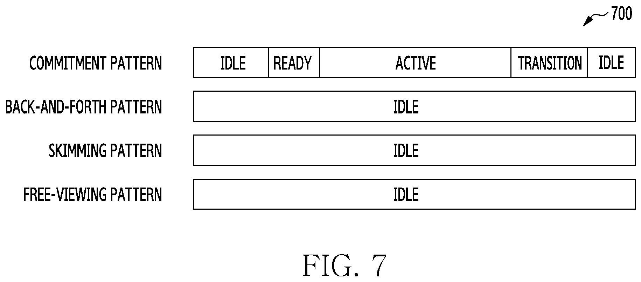

FIG. 7 is a diagram illustrating a state change over time of each of a plurality of reading patterns according to an embodiment.

FIG. 7 may be described with reference to FIGS. 1, 2, 3, 4A, 4B, 4C, 5, and 6.

FIG. 7 may illustrate an example 700 in which one pattern is activated.

In an embodiment, while displaying a content 230 (or in response to a request of an application 146 displaying the content 230), a wearable device 101 may identify a movement of a gaze of a user 200. In an embodiment, the wearable device 101 may identify the movement of the gaze of the user 200, based on eyes 211 and 215 (or positions of pupils of the eyes 211 and 215) identified in images consecutively obtained through a sensor 130. In an embodiment, the movement of the gaze may include a combination of a fixation and/or a saccade of the gaze. In an embodiment, the movement of the gaze may include a combination of a fixation and/or a saccade of the gaze identified during a designated time section. In an embodiment, the movement of the gaze may include a designated number of gaze fixations and/or saccades between the designated number of gaze fixations. In an embodiment, the designated number may be set for each of a plurality of patterns. For example, the designated number may be the number for determining whether to correspond to a pattern through the designated number of gaze fixations and/or saccades between the designated number of gaze fixations.

In an embodiment, the wearable device 101 may identify a pattern in which the user 200 appreciates the content 230, based on the movement of the gaze (or a combination of gaze fixations and gaze saccades). In an embodiment, the wearable device 101 may identify at least one pattern corresponding to a characteristic of the movement of the gaze among the plurality of patterns, based on the movement of the gaze.

In an embodiment, the wearable device 101 may identify a combination step (or a similarity) between the movement of the gaze and each of the plurality of patterns. For example, the wearable device 101 may determine whether a combination of a minimum number of a plurality of gaze fixations capable of interpreting a pattern and a plurality of gaze saccades between the plurality of gaze fixations corresponds to each of the plurality of patterns.

Referring to the example 700 of FIG. 7, it may be determined that the combination of the plurality of gaze fixations and the plurality of gaze saccades between the plurality of gaze fixations does not correspond to a back-and-forth pattern, a skimming pattern, and a free-viewing pattern. Referring to the example 700 of FIG. 7, a similarity for each of the back-and-forth pattern, the skimming pattern, and the free-viewing pattern may be identified as being less than or equal to a first reference similarity.

Referring to the example 700 of FIG. 7, it may be determined that the combination of the plurality of gaze fixations and the plurality of gaze saccades between the plurality of gaze fixations corresponds to a commitment pattern. Referring to the example 700 of FIG. 7, a similarity for the commitment pattern may be identified as being greater than the first reference similarity.

In an embodiment, while the commitment pattern is in an active state, the wearable device 101 may provide an auxiliary function (e.g., auto scroll) corresponding to the commitment pattern to the user. In an embodiment, while the commitment pattern is in a transition state, the wearable device 101 may provide the auxiliary function (e.g., auto scroll) corresponding to the commitment pattern to the user. In an embodiment, while the commitment pattern is in the transition state, the wearable device 101 may provide the user with the auxiliary function (e.g., auto scroll) having a lower intensity than an intensity (e.g., a speed) of the auxiliary function (e.g., auto scroll) provided in the active state.

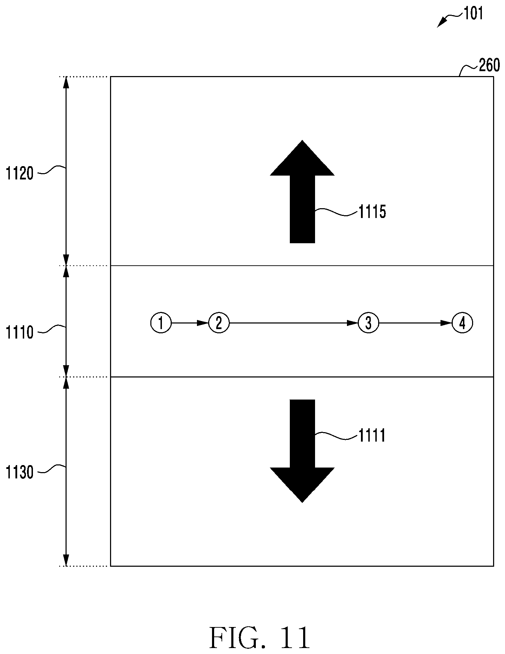

In FIG. 7, it is illustrated that the pattern corresponding to the movement of the gaze is the commitment pattern, but this is merely an example. For example, in a case that the pattern corresponding to the movement of the gaze is the back-and-forth pattern and a state of the back-and-forth pattern is the active state (or the transition state), the wearable device 101 may provide the user with a visual cue and/or an auxiliary screen (e.g., a screen indicating one area among two areas 220 and 225 to which the gaze jumps). For example, in a case that the pattern corresponding to the movement of the gaze is the skimming pattern and a state of the back-and-forth pattern is the active state (or the transition state), the wearable device 101 may summarize the content 230. In an embodiment, the wearable device 101 may display the summarized content 230 when the user views the content 230 next time. Hereinafter, auxiliary functions for each of the commitment pattern, the back-and-forth pattern, the skimming pattern, and the free-viewing pattern may be specifically described with reference to FIGS. 11 to 15.

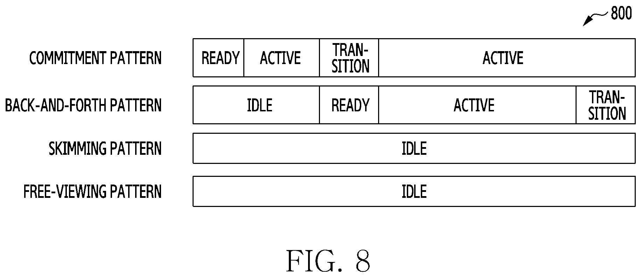

FIG. 8 is a diagram illustrating a state change over time of each of a plurality of reading patterns according to an embodiment.

FIG. 8 may be described with reference to FIGS. 1, 2, 3, 4A, 4B, 4C, 5, and 6.

FIG. 8 may illustrate an example 800 in which two patterns are simultaneously activated. Two patterns being simultaneously activated may refer to states of the two patterns being active states simultaneously. A situation in which a commitment pattern and a back-and-forth pattern are simultaneously activated as in the example 800 of FIG. 8 may appear when a user refers to a plurality of reading materials or when a plurality of images exist in one reading material.

In a situation as in FIG. 8, the wearable device 101 may select whether to provide a scroll function according to activation of the commitment pattern and a function of providing a visual cue (or an auxiliary screen) according to activation of the back-and-forth pattern. For example, in a situation as in FIG. 8, the wearable device 101 may simultaneously provide the scroll function and the function of providing the visual cue (or the auxiliary screen). For example, in a situation as in FIG. 8, the wearable device 101 may provide a selected function among the scroll function or the function of providing the visual cue (or the auxiliary screen). For example, in a case that there are many saccades to refer to various images in a situation in which a movement of a gaze according to the commitment pattern is not fast, the wearable device 101 may provide only the visual cue (or the auxiliary screen) without scrolling. For example, in a case of referring to a small number of images through saccades in a situation in which the movement of the gaze according to the commitment pattern is not fast, the wearable device 101 may provide the visual cue (or the auxiliary screen) together with scrolling. However, it is not limited thereto.

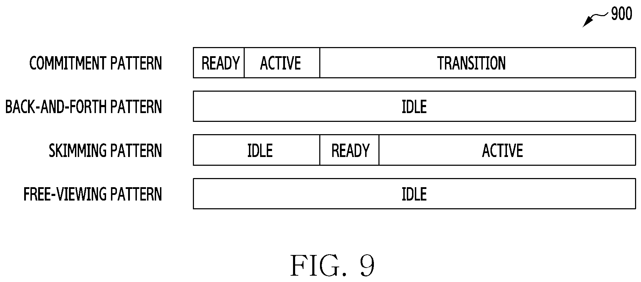

FIG. 9 is a diagram illustrating a state change over time of each of a plurality of reading patterns according to an embodiment.

FIG. 9 may be described with reference to FIGS. 1, 2, 3, 4A, 4B, 4C, 5, and 6.

FIG. 9 may illustrate an example 900 in which two patterns are sequentially activated. Two patterns being sequentially activated may refer to a state of one of the two patterns being an active state while a state of another one is a transition state. A situation in which a commitment pattern and a skimming pattern are sequentially activated as in the example 900 of FIG. 9 may appear when a user extracts and commitment-reads a necessary portion (e.g., appreciation of a web page).

In a situation as in FIG. 9, the wearable device 101 may select whether to perform a scroll function according to activation of the commitment pattern and a summary function of a content 230 according to activation of the skimming pattern. For example, in a situation as in FIG. 9, the wearable device 101 may simultaneously perform the scroll function and the summary function of the content 230. For example, in a situation as in FIG. 9, while providing the scroll function, the wearable device 101 may summarize the content 230 based on first areas in which a gaze of the user is positioned and second areas in which the gaze of the user is not positioned (or in which the gaze of the user jumps) (or in which the gaze of the user is not fixed). For example, the wearable device 101 may summarize the content 230 based on contents of the first areas. Accordingly, when the user views the content 230 again, the user may identify a summary of contents that the user has intensively appreciated. For example, the wearable device 101 may summarize the content 230 based on contents of the second areas. Accordingly, when the user views the content 230 again, the user may identify a summary of contents that the user has not identified.

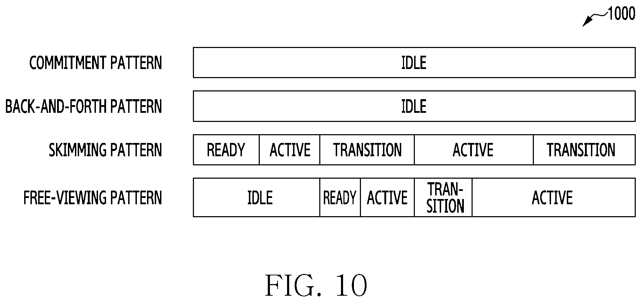

FIG. 10 is a diagram illustrating a state change over time of each of a plurality of reading patterns according to an embodiment.

FIG. 10 may be described with reference to FIGS. 1, 2, 3, 4A, 4B, 4C, 5, and 6.

FIG. 10 may illustrate an example 1000 in which a free-viewing pattern is simultaneously (or sequentially) activated with other patterns. A situation in which a skimming pattern and the free-viewing pattern are simultaneously (or sequentially) activated as in the example 1000 of FIG. 10 may appear when a user appreciates a content including a short text and a plurality of images (e.g., a comic book or a movie).

In a situation as in FIG. 10, as the skimming pattern and the free-viewing pattern are simultaneously (or sequentially) activated, a wearable device 101 may provide an auxiliary function simultaneously corresponding to the skimming pattern and the free-viewing pattern. In an embodiment, the wearable device 101 may provide, in addition to the auxiliary function corresponding to the skimming pattern or the free-viewing pattern, an auxiliary function simultaneously corresponding to the skimming pattern and the free-viewing pattern. For example, as the skimming pattern and the free-viewing pattern are simultaneously (or sequentially) activated, the wearable device 101 may display subtitles of the movie at a position of a gaze of the user. However, it is not limited thereto.

FIG. 11 is a diagram illustrating an operation in which a wearable device provides a reading assistance function corresponding to a commitment pattern according to an embodiment.

FIG. 11 may be described with reference to FIGS. 1, 2, 3, 4A, 4B, 4C, 5, and 6.

In an embodiment, while the commitment pattern is activated (or while the commitment pattern is in a transition state after being activated), a wearable device 101 may scroll a content 230.

For example, referring to FIG. 11, the wearable device 101 may scroll the content 230 at a scroll speed for causing a gaze of a user 200 to view a designated area 1110 (or a comfortable area). In an embodiment, the designated area 1110 may be positioned at a center between an upper area 1120 having a designated size of a display 120 and a lower area 1130 having another designated size. However, it is not limited thereto. The designated area 1110 may be an area including a position of the gaze identified when the user previously appreciated the content 230. The designated area 1110 may be an area in which the gaze is mainly positioned by scrolling according to a user input when the user previously appreciated the content 230.

In an embodiment, the wearable device 101 may identify a scroll speed based on a speed (e.g., a time length of gaze fixations 1, 2, 3, and 4) at which the user 200 reads the content 230. For example, the wearable device 101 may identify a scroll speed proportional to the speed at which the content 230 is read. In an embodiment, the wearable device 101 may identify a scroll speed based on a distance (or a speed) by which the gaze jumps in a line break direction. For example, the wearable device 101 may identify a scroll speed proportional to a distance (or a speed) of a gaze saccade in a line break direction 1111. In an embodiment, the wearable device 101 may identify a scroll speed based on a degree of similarity. For example, the wearable device 101 may identify a higher scroll speed as the similarity is higher.

In an embodiment, the wearable device 101 may identify a scroll direction based on a direction (e.g., the line break direction 1111 or a direction 1115 opposite to the line break direction 1111) of a gaze saccade. For example, the wearable device 101 may determine the scroll direction as the direction of the gaze saccade.

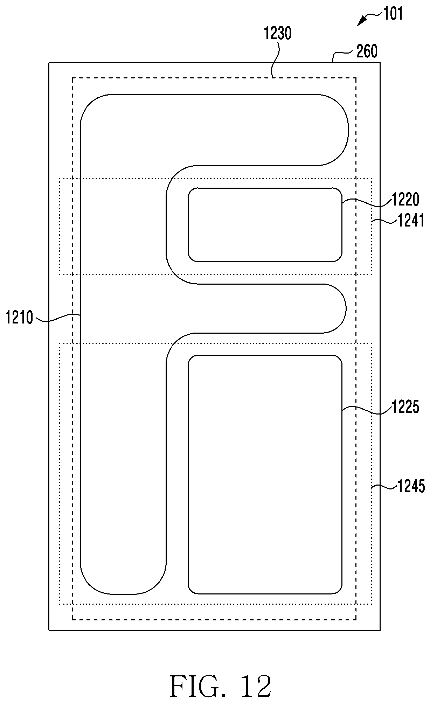

FIG. 12 is a diagram illustrating an operation in which a wearable device provides a reading assistance function corresponding to a skimming pattern according to an embodiment.

FIG. 12 may be described with reference to FIGS. 1, 2, 3, 4A, 4B, 4C, 5, and 6.

In an embodiment, a wearable device 101 may summarize a content 230 based on the skimming pattern being activated.

For example, referring to FIG. 12, according to the skimming pattern, the wearable device 101 may summarize the content 230 based on a area 1210 in which a user 200 intensively appreciated the content 230 (or an area having a high heatmap) (or an area in which a gaze of the user is positioned) and areas 1220 and 1225 that the user 200 did not view (or areas to which the gaze jumps) (or areas in which the gaze is not positioned) (or areas in which the gaze of the user is not fixed).

In an embodiment, in a case that the area 1210 of the content 230 appreciated by the user 200 is greater than or equal to a reference ratio of an entire area of the content 230, the wearable device 101 may summarize a portion of the content 230 corresponding to the area 1210 in which the content 230 is appreciated. In an embodiment, in a case that the area 1210 of the content 230 appreciated by the user 200 is less than the reference ratio of the entire area of the content 230, the wearable device 101 may summarize portions of the content 230 corresponding to the areas 1220 and 1225 other than the area 1210 in which the content 230 is appreciated. However, it is not limited thereto.

For example, referring to FIG. 12, the wearable device 101 may summarize a portion 1230 of the content 230 including the area 1210 in which the content 230 is appreciated and areas adjacent to the area 1210 in which the content 230 is appreciated. For example, an adjacent area may be an area including a related content for summarizing the area 1210 in which the content 230 is appreciated. For example, the adjacent area may include an area of a sentence included in both the area 1210 in which the content 230 is appreciated and the adjacent area.

For example, referring to FIG. 12, the wearable device 101 may summarize portions 1241 and 1245 of the content 230 including the areas 1220 and 1225 and areas adjacent to the areas 1220 and 1225. For example, an adjacent area may be an area including a related content for summarizing the areas 1220 and 1225 that are not appreciated among the area 1210 in which the content 230 is appreciated. For example, the adjacent area may include an area of a sentence included in both the areas 1220 and 1225 in which the content 230 is not appreciated and the area 1210 in which the content 230 is appreciated.

According to an embodiment, the wearable device 101 may display, on the content 230, a heatmap indicating the area 1210 in which the content 230 is appreciated. However, it is not limited thereto.

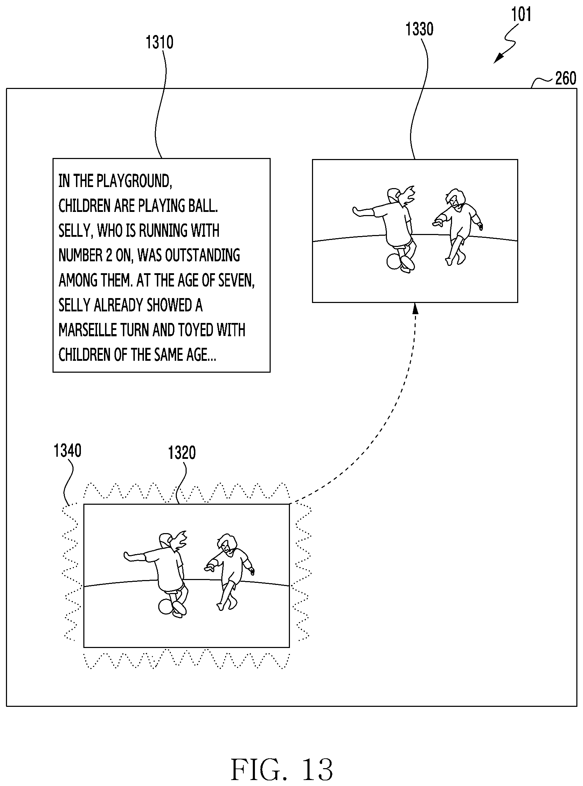

FIG. 13 is a diagram illustrating an operation in which a wearable device provides a reading assistance function corresponding to a back-and-forth pattern according to an embodiment.

FIG. 13 may be described with reference to FIGS. 1, 2, 3, 4A, 4B, 4C, 5, and 6.

In an embodiment, a wearable device 101 may provide a visual cue 1340 and/or an auxiliary screen 1330 based on the back-and-forth pattern being activated.

For example, referring to FIG. 13, the wearable device 101 may provide the visual cue 1340 and/or the auxiliary screen 1330 for a partial area of a content 230, based on two or more areas 1310 and 1320 between which gaze saccades of a user 200 are generated for each other according to the back-and-forth pattern.

In an embodiment, in a case that a gaze saccade between the area 1310 including a text and the area 1320 including an image is repeated (e.g., two times or more), the wearable device 101 may provide the visual cue 1340 and/or the auxiliary screen 1330 for the area 1320 including the image.

For example, the wearable device 101 may provide the visual cue 1340 (e.g., image flickering) around the area 1320 including the image. For example, the wearable device 101 may crop the area 1320 including the image and then paste the cropped image around the area 1310 including the text. For example, the wearable device 101 may display the auxiliary screen 1330 for the area 1320 including the image around the area 1310 including the text.

In FIG. 13, it is illustrated that the wearable device 101 displays an auxiliary screen of an image around a text, but this is merely an example. According to an embodiment, the wearable device 101 may display an auxiliary screen of the text around the image.

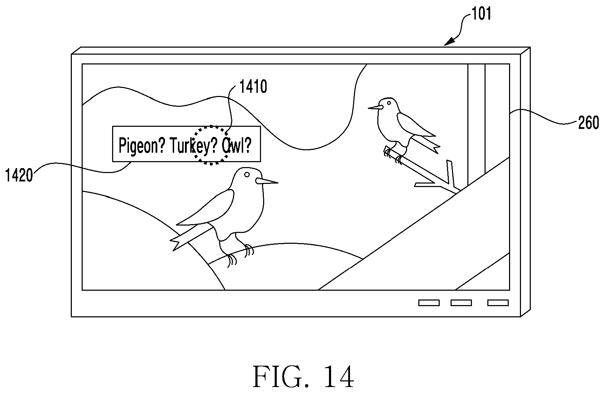

FIG. 14 is a diagram illustrating an operation in which a wearable device provides a reading assistance function corresponding to a free-viewing pattern according to an embodiment.

FIG. 14 may be described with reference to FIGS. 1, 2, 3, 4A, 4B, 4C, 5, and 6.

In an embodiment, a wearable device 101 may activate (or provide) an auxiliary function based on a type of a content 230, based on the free-viewing pattern being activated. For example, based on the content 230 including an additional content, the wearable device 101 may determine a display position of the additional content based on a position of a gaze of a user 200. For example, based on the content 230 being a movie including subtitles, the wearable device 101 may determine a display position of the subtitles based on the position of the gaze of the user 200. For example, referring to FIG. 14, the wearable device 101 may display a subtitle 1420 at a position of a gaze 1410 of the user 200. However, it is not limited thereto. In a case that the user 200 does not appreciate the additional content, the wearable device 101 may determine a position of the additional content of the content 230 to be away from the gaze of the user 200.

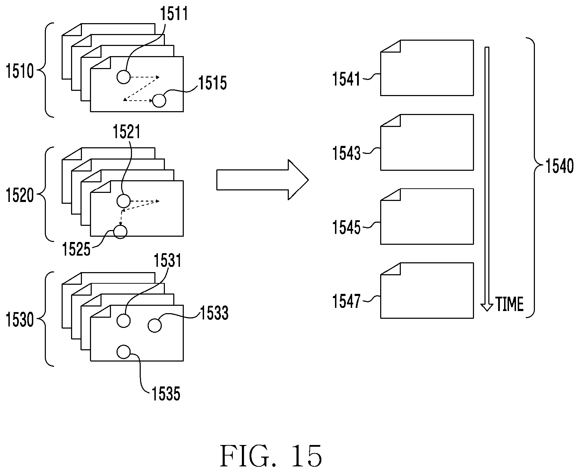

FIG. 15 is a diagram illustrating an operation in which a wearable device generates a lifelog according to reading patterns of a gaze according to an embodiment.

FIG. 15 may be described with reference to FIGS. 1, 2, 3, 4A, 4B, 4C, 5, and 6.

In FIGS. 2 to 14, it is illustrated that a wearable device 101 provides an auxiliary function to a user 200 when the user 200 of the wearable device 101 appreciates a content 230. Provision of the auxiliary function of the wearable device 101 is not limited only to when the content 230 is appreciated. For example, while the user 200 conducts daily life, the wearable device 101 may provide a designated function to the user 200 based on a movement of a gaze of the user 200.

For example, the wearable device 101 may summarize screens 1510, 1520, and 1530 displayed through a display 120 based on a concentration level while the user 200 uses the wearable device 101. For example, the wearable device 101 may summarize the screens 1510, 1520, and 1530 displayed through the display 120 to summarize (or lifelog) a day of the user 200. For example, the wearable device 101 may summarize a content of a screen of the display 120 viewed by the user 200 as a text and/or an image. For example, in a case that the user 200 recognizes the screens 1510 and 1520 of the display 120 as semantic information (e.g., a commitment pattern and/or a skimming pattern), the wearable device 101 may summarize a corresponding screen as a text. For example, in a case that a movement of a gaze according to gaze fixations 1511, 1515, 1521, and 1525 viewing the screens 1510 and 1520 of the display 120 corresponds to the commitment pattern and/or the skimming pattern, the wearable device 101 may summarize a corresponding screen as a text (e.g., 1541 and 1543).

For example, in a case that the user 200 recognizes the screen 1530 of the display 120 as visual information (e.g., a back-and-forth pattern and/or a free-viewing pattern), the wearable device 101 may summarize a corresponding screen as an image. For example, in a case that a movement of a gaze according to gaze fixations 1531, 1533, and 1535 viewing the screen 1530 of the display 120 corresponds to the back-and-forth pattern and/or the free-viewing pattern, the wearable device 101 may summarize a corresponding screen as an image (e.g., 1545 and 1547).

For example, the wearable device 101 may provide the user 200 with a content 1540 summarizing (or lifelogging) a day.

According to an embodiment, the wearable device 101 may be a device for providing an extended reality (XR) service that displays an image generated by a computer. In an embodiment, the XR service may include a service for augmented reality (AR), virtual reality (VR), or mixed reality (MR) in which augmented reality and virtual reality are mixed. For example, the wearable device 101 may be AR glasses and/or a head-mounted device (HMD). In this case, the screens 1510, 1520, and 1530 of FIG. 15 may be screens in which an image indicating real reality is displayed on the display 120. In this case, the screens 1510, 1520, and 1530 of FIG. 15 may be screens for pass through (or video see through (VST)).

In an embodiment, in a case that the wearable device 101 is the device for providing the XR service, while the user 200 wears the wearable device 101, the wearable device 101 may summarize a content of an image obtained through a camera module 180 (or an image indicating a front side of the user 200) as a text and/or an image. For example, in a case that the wearable device 101 recognizes an image indicating a real space passed through (or VSTed) as semantic information (e.g., the commitment pattern and/or the skimming pattern), the wearable device 101 may summarize a corresponding image as a text. For example, in a case that the wearable device 101 recognizes the image indicating the real space passed through (or VSTed) as visual information (e.g., the back-and-forth pattern and/or the free-viewing pattern), the wearable device 101 may summarize a corresponding image as an image.

FIG. 16 is a flowchart illustrating an operation of a wearable device according to an embodiment.

FIG. 16 may be described with reference to FIGS. 1, 2, 3, 4A, 4B, 4C, 5, and 6.

Referring to FIG. 16, in operation 1610, a wearable device 101 may identify a movement of a gaze.

In an embodiment, the wearable device 101 may identify a characteristic of the gaze (or the movement of the gaze) based on positions of pupils of eyes 211 and 215 and a distance from the eyes 211 and 215 of a user 200. In an embodiment, the characteristic of the gaze (or the characteristic of the movement of the gaze) may include a fixation and a saccade of the gaze. In an embodiment, the fixation of the gaze may refer to a situation in which the eyes 211 and 215 are maintained for a predetermined time (e.g., 200 milliseconds) or more in a state of focusing on a specific position. For example, the saccade of the gaze may refer to a situation in which the eyes 211 and 215 rapidly move between two neighboring fixations of the gaze.

In operation 1620, the wearable device 101 may identify a similarity with reading patterns.

In an embodiment, the wearable device 101 may identify at least one pattern corresponding to the movement of the gaze of the user 200, based on the characteristic of the saccade and/or the characteristic of the fixation of the gaze of the user 200. In an embodiment, the wearable device 101 may identify a combination step (or a similarity) between the movement of the gaze and each of a plurality of patterns, based on characteristics of a plurality of gaze fixations and/or characteristics of a plurality of gaze saccades indicating the movement of the gaze during a designated time length (or a time window). For example, the wearable device 101 may determine whether a combination of a minimum number of a plurality of gaze fixations capable of interpreting a pattern and a plurality of gaze saccades between the plurality of gaze fixations corresponds to each of the plurality of patterns.

For example, in a case that a commitment pattern is determined based on 2 gaze fixations and 1 gaze saccade, the wearable device 101 may determine whether each of 9 movements of the gaze combined based on 10 gaze fixations and 9 gaze saccades corresponds to the commitment pattern. For example, the wearable device 101 may identify a ratio of movements corresponding to the commitment pattern among the 9 movements of the gaze as a combination step (or a similarity) for the commitment pattern.

For example, in a case that a skimming pattern is determined based on 3 gaze fixations and 2 gaze saccades, the wearable device 101 may determine whether each of 8 movements of the gaze combined based on 10 gaze fixations and 9 gaze saccades corresponds to the skimming pattern. For example, the wearable device 101 may identify a ratio of movements corresponding to the skimming pattern among the 8 movements of the gaze as a combination step (or a similarity) for the skimming pattern.

For example, in a case that a back-and-forth pattern is determined based on 4 gaze fixations and 3 gaze saccades, the wearable device 101 may determine whether each of 7 movements of the gaze combined based on 10 gaze fixations and 9 gaze saccades corresponds to the back-and-forth pattern. For example, the wearable device 101 may identify a ratio of movements corresponding to the back-and-forth pattern among the 7 movements of the gaze as a combination step (or a similarity) for the back-and-forth pattern.

Identifying a combination step (or a similarity) based on a ratio of movements is merely an example. For example, the wearable device 101 may identify, as a similarity, a distance (or a cosine similarity) between a value (or a vector value) indicated by characteristics of a plurality of gaze fixations and/or characteristics of a plurality of gaze saccades indicating a movement of a gaze during a designated time length (or a time window) and a value (or a vector value) indicated by characteristics of a gaze fixation and a gaze saccade set for each of the plurality of patterns. However, it is not limited thereto. In an embodiment, the wearable device 101 may identify a probability for each of the plurality of patterns as a similarity by inputting, to an artificial intelligence (AI) model (e.g., a model adopting a convolutional neural network (CNN)) for classifying classes (or patterns), the values (or the vector values) indicated by the characteristics of the plurality of gaze fixations and/or the characteristics of the plurality of gaze saccades indicating the movement of the gaze during the designated time length (or the time window).

In operation 1630, the wearable device 101 may determine whether a reading pattern is activated.

In an embodiment, the wearable device 101 may identify a state of each of the plurality of patterns based on a similarity of each of the plurality of patterns. In an embodiment, the state of each of the plurality of patterns may include an idle, a ready, an active, or a transition. In an embodiment, the wearable device 101 may identify that a pattern having a state other than the idle (i.e., the ready, the active, or the transition) among the plurality of patterns is a pattern corresponding to the movement of the gaze.

In an embodiment, after a state of the pattern is changed from the transition to the idle, in a time section during which a similarity between the pattern and the movement of the gaze is maintained to be less than a first reference similarity, the pattern may be determined as an idle state. In an embodiment, from a time point at which the similarity between the pattern and the movement of the gaze increases to be greater than or equal to the first reference similarity in the state of the pattern being the idle state, during a time section for a ready time, the pattern may be determined as a ready state. In an embodiment, from after the ready time from a time point at which the state of the pattern is the ready state, in a time section in which the similarity is greater than or equal to a second reference similarity, the pattern may be determined as an active state. In an embodiment, from a time point at which the similarity between the pattern and the movement of the gaze decreases to be less than the second reference similarity while the state of the pattern is the active state, during a time section for a transition time, the pattern may be determined as a transition state. In an embodiment, in a case that the similarity of the pattern does not increase to be greater than or equal to the first reference similarity during the transition time, the pattern may be determined as the idle state after the transition time.

In the operation 1630, based on determining that the reading pattern is activated, the wearable device 101 may perform operation 1640. In the operation 1630, based on determining that the reading pattern is not activated, the wearable device 101 may perform the operation 1620 again.

In operation 1640, the wearable device 101 may provide a reading assistance function corresponding to the activated reading pattern. In an embodiment, the wearable device 101 may identify an additional function (or the reading assistance function) corresponding to the pattern corresponding to the movement of the gaze. For example, in a case that there is one pattern corresponding to the movement of the gaze, the wearable device 101 may identify one additional function. In an embodiment, the wearable device 101 may provide (or perform) the identified at least one additional function.

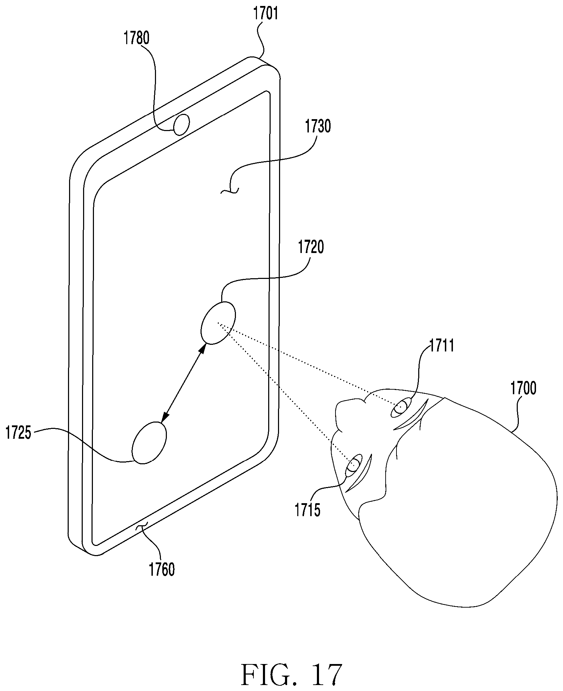

FIG. 17 is a diagram illustrating a situation in which an electronic device identifies a gaze of a user according to an embodiment.

An electronic device 1701 of FIG. 17 may be an electronic device that is not worn on a head of a user 1700. However, it is not limited thereto.

Referring to FIG. 17, the electronic device 1701 may include a display 1760 displaying a content 1730 and a sensor 1780. In an embodiment, the display 1760 may correspond to the display 120 of FIG. 1 or a display module 1860 of FIG. 18. In an embodiment, the sensor 1780 may correspond to the sensor 130 of FIG. 1. In an embodiment, the sensor 130 may correspond to a camera module 1880 and/or a sensor module 1876 of FIG. 18. In FIG. 17, the sensor 1780 is illustrated as being one, but this is only an example. In an embodiment, the sensor 1780 may be two or more hardware. For example, the sensor 1780 may include a camera module for obtaining an image physically spaced apart from (or distinguished from) each other and a sensor module for obtaining surrounding spatial information. For example, the sensor 1780 may be arranged to face a face of the user 1700 when the user 1700 views the display 1760 of the electronic device 1701, so as to capture at least a portion (e.g., eyes 1721 and 1715) of the face of the user 1700.

In an embodiment, the user 1700 may view the display 1760 of the electronic device 1701 through eyes 1711 and 1715. The user 200 may appreciate the content 1730 displayed through the display 1760. In an embodiment, when the user 1700 appreciates the content 1730, the electronic device 1701 may provide a convenience function. For example, when the user 200 appreciates the content 1730, the electronic device 1701 may provide a convenience function corresponding to a reading pattern of the user 1700 (or a movement pattern of a gaze of the user 1700). In an embodiment, the convenience function corresponding to the reading pattern (or the movement pattern of the gaze of the user 1700) may correspond to the convenience function provided by the wearable device 101 described with reference to FIGS. 1 to 16.

FIG. 18 is a block diagram illustrating an electronic device 1801 in a network environment 1800 according to various embodiments.

Referring to FIG. 18, the electronic device 1801 in the network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module (SIM) 1896, or an antenna module 1897. In some embodiments, at least one of the components (e.g., the connecting terminal 1878) may be omitted from the electronic device 1801, or one or more other components may be added in the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, an SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 1864dB or less) for implementing mMTC, or U-plane latency (e.g., 0.5ms or less for each of downlink (DL) and uplink (UL), or a round trip of 18ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

As described above, a wearable device 101 may comprise a display 120. The wearable device 101 may comprise a sensor 130 obtaining data for identifying a gaze of a user. The wearable device 101 may comprise at least one processor 110 including processing circuitry. The wearable device 101 may comprise memory comprising one or more storage media storing instructions. The instructions, when executed by the at least one processor 110 individually or collectively, cause the wearable device 101 to, through the display 120, while displaying a content 230, identify a movement of the gaze of the user through the sensor 130. The movement may comprise a combination of a saccade of the gaze or a fixation of the gaze. The instructions, when executed by the at least one processor 110 individually or collectively, cause the wearable device 101 to identify at least one reading pattern corresponding to the movement among a plurality of reading patterns which include different characteristics of the saccade and/or different characteristics of the fixation, based on characteristics of the saccade of the movement and/or characteristics of the fixation of the movement. The instructions, when executed by the at least one processor 110 individually or collectively, cause the wearable device 101 to provide a reading assistance function corresponding to the at least one reading pattern through the display 120.

The instructions, when executed by the at least one processor 110 individually or collectively, cause the wearable device 101 to, based on that a direction of the saccade of the movement corresponds to a writing direction of the content 230, and the fixation of the movement is maintained more than a reference time, identify a commitment pattern as the at least one reading pattern. The instructions, when executed by the at least one processor 110 individually or collectively, cause the wearable device 101 to scroll the content 230 based on that the commitment pattern is identified as the at least one reading pattern.

The instructions, when executed by the at least one processor 110 individually or collectively, cause the wearable device 101 to determine a speed of scrolling corresponding to the commitment pattern based on a position of the gaze within the content 230 and/or a period of the saccade of the movement. The instructions, when executed by the at least one processor 110 individually or collectively, cause the wearable device 101 to scroll the content 230 based on the determined speed.

The instructions, when executed by the at least one processor 110 individually or collectively, cause the wearable device 101 to identify a skimming pattern as the at least one reading pattern based on that a distance of the saccade of the gaze included in the movement is greater than or equal to a reference distance and a time length of the fixation of the gaze is less than or equal to a reference time length. The instructions, when executed by the at least one processor 110 individually or collectively, cause the wearable device 101 to, based on that the skimming pattern is identified as the at least one reading pattern, summarize the content 230. The instructions, when executed by the at least one processor 110 individually or collectively, cause the wearable device 101 to provide the summarized content 230 through the display 120.

The instructions, when executed by the at least one processor 110 individually or collectively, cause the wearable device 101 to identify first areas on which the gaze is fixed and second areas on which the gaze is skipped within the content 120. The instructions, when executed by the at least one processor 110 individually or collectively, cause the wearable device 101 to summarize the content 230 based on portions of the content 230 included in the first areas.

The instructions, when executed by the at least one processor 110 individually or collectively, cause the wearable device 101 to identify a back-and-forth pattern as the at least one reading pattern based on that the movement repeatedly jumps between a first area and a second area. The instructions, when executed by the at least one processor 110 individually or collectively, cause the wearable device 101 to, based on that the back-and-forth pattern is identified as the at least one reading pattern, display a portion of the content 230 displayed in the second area around the first area.

The instructions, when executed by the at least one processor 110 individually or collectively, cause the wearable device 101 to identify a back-and-forth pattern as the at least one reading pattern based on that the movement repeatedly jumps between a first area and a second area. The instructions, when executed by the at least one processor 110 individually or collectively, cause the wearable device 101 to, based on that the back-and-forth pattern is identified as the at least one reading pattern, display a visual cue for the second area while the gaze is positioned in the first area.

The instructions, when executed by the at least one processor 110 individually or collectively, cause the wearable device 101 to identify a similarity between each of the plurality of reading patterns and the movement. The instructions, when executed by the at least one processor 110 individually or collectively, cause the wearable device 101 to identify the at least one read pattern having the similarity with the movement exceeding a first reference similarity.

The instructions, when executed by the at least one processor 110 individually or collectively, cause the wearable device 101 to provide the reading assistance function corresponding to the at least one reading pattern after a reference time from a time point when the similarity exceeds the first reference similarity.

The instructions, when executed by the at least one processor 110 individually or collectively, cause the wearable device 101 to, while the reading assistance function is provided, identify that the similarity is less than or equal to a second reference similarity. The instructions, when executed by the at least one processor 110 individually or collectively, cause the wearable device 101 to cease providing the reading assistance function corresponding to the at least one reading pattern after another reference time in a state in which the similarity is less than or equal to the second reference similarity.

The instructions, when executed by the at least one processor 110 individually or collectively, cause the wearable device 101 to, based on that the at least one reading pattern is two or more reading patterns, identify two or more reading assistance functions corresponding to each of the two or more reading patterns. The instructions, when executed by the at least one processor 110 individually or collectively, cause the wearable device 101 to provide at least one reading assistance function selected from the two or more reading assistance functions through the display 120.

The instructions, when executed by the at least one processor 110 individually or collectively, cause the wearable device 101 to, based on that the at least one reading pattern is two or more reading patterns, identify one reading assistance function set for the two or more reading patterns. The instructions, when executed by the at least one processor 110 individually or collectively, cause the wearable device 101 to provide the one reading assistance function through the display 120.

As described above, a method may be executed by a wearable device 101, comprising a display 120, and a sensor 130 obtaining data for identifying a gaze of a user. The method may comprise, through the display 120, while displaying a content 230, identifying a movement of the gaze of the user through the sensor 130. The movement may comprise a combination of a saccade of the gaze or a fixation of the gaze. The method may comprise identifying at least one reading pattern corresponding to the movement among a plurality of reading patterns which include different characteristics of the saccade and/or different characteristics of the fixation, based on characteristics of the saccade of the movement and/or characteristics of the fixation of the movement. The method may comprise providing a reading assistance function corresponding to the at least one reading pattern through the display 120.

The method may comprise, based on that a direction of the saccade of the movement corresponds to a writing direction of the content 230, and the fixation of the movement is maintained more than a reference time, identifying a commitment pattern as the at least one reading pattern. The method may comprise scrolling the content 230 based on that the commitment pattern is identified as the at least one reading pattern.

The method may comprise identifying a skimming pattern as the at least one reading pattern based on that a distance of the saccade of the gaze included in the movement is greater than or equal to a reference distance and a time length of the fixation of the gaze is less than or equal to a reference time length. The method may comprise, based on that the skimming pattern is identified as the at least one reading pattern, summarizing the content 230. The method may comprise providing the summarized content 230 through the display 120.

The method may comprise identifying a back-and-forth pattern as the at least one reading pattern based on that the movement repeatedly jumps between a first area and a second area. The method may comprise, based on that the back-and-forth pattern is identified as the at least one reading pattern, displaying a portion of the content 230 displayed in the second area around the first area.

The method may comprise identifying a back-and-forth pattern as the at least one reading pattern based on that the movement repeatedly jumps between a first area and a second area. The method may comprise, based on that the back-and-forth pattern is identified as the at least one reading pattern, displaying a visual cue for the second area while the gaze is positioned in the first area.

The method may comprise identifying a similarity between each of the plurality of reading patterns and the movement. The method may comprise identifying the at least one read pattern having the similarity with the movement exceeding a first reference similarity.

The method may comprise providing the reading assistance function corresponding to the at least one reading pattern after a reference time from a time point when the similarity exceeds the first reference similarity.

The method may comprise, while the reading assistance function is provided, identifying that the similarity is less than or equal to a second reference similarity. The method may comprise ceasing providing the reading assistance function corresponding to the at least one reading pattern after another reference time in a state in which the similarity is less than or equal to the second reference similarity.

As described above, a non-transitory computer-readable storage medium may store a program including instructions. The instructions, when executed by at least one processor 110 of a wearable device 101 including a display 120 and a sensor 130 obtaining data for identifying a gaze of a user individually or collectively, may cause the wearable device 101 to, through the display 120, while displaying a content 230, identify a movement of the gaze of the user through the sensor 130. The movement may comprise a combination of a saccade of the gaze or a fixation of the gaze. The instructions, when executed by the at least one processor 110 individually or collectively, may cause the wearable device 101 to identify at least one reading pattern corresponding to the movement among a plurality of reading patterns which include different characteristics of the saccade and/or different characteristics of the fixation, based on characteristics of the saccade of the movement and/or characteristics of the fixation of the movement. The instructions, when executed by at least one processor 110 individually or collectively, may cause the wearable device 101 to provide a reading assistance function corresponding to the at least one reading pattern through the display 120.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device(101), comprising:
a display(120),
a sensor(130) obtaining data for identifying a gaze of a user,
at least one processor(110) including processing circuitry, and
memory(130) comprising one or more storage media storing instructions, wherein the instructions, when executed by the at least one processor(110) individually or collectively, cause the wearable device(101) to:
through the display(120), while displaying a content(230), identify a movement of the gaze of the user through the sensor(130), the movement comprising a combination of a saccade of the gaze or a fixation of the gaze,
identify at least one reading pattern corresponding to the movement among a plurality of reading patterns which include different characteristics of the saccade and/or different characteristics of the fixation, based on characteristics of the saccade of the movement and/or characteristics of the fixation of the movement, and
provide a reading assistance function corresponding to the at least one reading pattern through the display(120).

2. The wearable device of claim 1,
wherein the instructions, when executed by the at least one processor(110) individually or collectively, cause the wearable device(101) to:
based on that a direction of the saccade of the movement corresponds to a writing direction of the content(230), and the fixation of the movement is maintained more than a reference time, identify a commitment pattern as the at least one reading pattern, and
scroll the content(230) based on that the commitment pattern is identified as the at least one reading pattern.

3. The wearable device of claim1 or claim 2,
wherein the instructions, when executed by the at least one processor(110) individually or collectively, cause the wearable device(101) to:
determine a speed of scrolling corresponding to the commitment pattern based on a position of the gaze within the content(230) and/or a period of the saccade of the movement, and
scroll the content(230) based on the determined speed.

4. The wearable device of any one of claim 1 to 3,
wherein the instructions, when executed by the at least one processor(110) individually or collectively, cause the wearable device(101) to:
identify a skimming pattern as the at least one reading pattern based on that a distance of the saccade of the gaze included in the movement is greater than or equal to a reference distance and a time length of the fixation of the gaze is less than or equal to a reference time length,
based on that the skimming pattern is identified as the at least one reading pattern, summarize the content(230), and
provide the summarized content(230) through the display(120).

5. The wearable device of claim 4,
wherein the instructions, when executed by the at least one processor(110) individually or collectively, cause the wearable device(101) to:
identify first areas on which the gaze is fixed and second areas on which the gaze is skipped within the content(230),
summarize the content(230) based on portions of the content(230) included in the first areas.

6. The wearable device of any one of claim 1 to 5,
wherein the instructions, when executed by the at least one processor(110) individually or collectively, cause the wearable device(101) to:
identify a back-and-forth pattern as the at least one reading pattern based on that the movement repeatedly jumps between a first area and a second area,
based on that the back-and-forth pattern is identified as the at least one reading pattern, display a portion of the content(230) displayed in the second area around the first area.

7. The wearable device of any one of claim 1 to 6,
wherein the instructions, when executed by the at least one processor(110) individually or collectively, cause the wearable device(101) to:
identify a back-and-forth pattern as the at least one reading pattern based on that the movement repeatedly jumps between a first area and a second area, and
based on that the back-and-forth pattern is identified as the at least one reading pattern, display a visual cue for the second area while the gaze is positioned in the first area.

8. The wearable device of any one of claim 1 to 7,
wherein the instructions, when executed by the at least one processor(110) individually or collectively, cause the wearable device(101) to:
identify a similarity between each of the plurality of reading patterns and the movement, and
identify the at least one read pattern having the similarity with the movement exceeding a first reference similarity.

9. The wearable device of claim 8,
wherein the instructions, when executed by the at least one processor(110) individually or collectively, cause the wearable device(101) to:
provide the reading assistance function corresponding to the at least one reading pattern after a reference time from a time point when the similarity exceeds the first reference similarity.

10. The wearable device of claim 9,
wherein the instructions, when executed by the at least one processor(110) individually or collectively, cause the wearable device(101) to:
while the reading assistance function is provided, identify that the similarity is less than or equal to a second reference similarity, and
cease providing the reading assistance function corresponding to the at least one reading pattern after another reference time in a state in which the similarity is less than or equal to the second reference similarity.

11. The wearable device of any one of claim 1 to 10,
wherein the instructions, when executed by the at least one processor(110) individually or collectively, cause the wearable device(101) to:
based on that the at least one reading pattern is two or more reading patterns, identify two or more reading assistance functions corresponding to each of the two or more reading patterns, and
provide at least one reading assistance function selected from the two or more reading assistance functions through the display(120).

12. The wearable device of any one of claim 1 to 11,
wherein the instructions, when executed by the at least one processor(110) individually or collectively, cause the wearable device(101) to:
based on that the at least one reading pattern is two or more reading patterns, identify one reading assistance function set for the two or more reading patterns, and
provide the one reading assistance function through the display(120).

13. A method executed by a wearable device(101), comprising a display(120), and a sensor(130) obtaining data for identifying a gaze of a user, comprising:
through the display(120), while displaying a content(230), identifying a movement of the gaze of the user through the sensor(130), the movement comprising a combination of a saccade of the gaze or a fixation of the gaze,
identifying at least one reading pattern corresponding to the movement among a plurality of reading patterns which include different characteristics of the saccade and/or different characteristics of the fixation, based on characteristics of the saccade of the movement and/or characteristics of the fixation of the movement, and
providing a reading assistance function corresponding to the at least one reading pattern through the display(120).

14. The method of claim 13, comprising:
based on that a direction of the saccade of the movement corresponds to a writing direction of the content(230), and the fixation of the movement is maintained more than a reference time, identifying a commitment pattern as the at least one reading pattern, and
scrolling the content(230) based on that the commitment pattern is identified as the at least one reading pattern.

15. The method of claim 13 or claim 14, comprising:
identifying a skimming pattern as the at least one reading pattern based on that a distance of the saccade of the gaze included in the movement is greater than or equal to a reference distance and a time length of the fixation of the gaze is less than or equal to a reference time length,
based on that the skimming pattern is identified as the at least one reading pattern, summarizing the content(230), and
providing the summarized content(230) through the display(120).
